# EUROPEAN PATENT APPLICATION

(11) **EP 4 800 528 A1**
(43) Date of publication of application: **02.09.2026**
(21) Application number: 24894363.1
(22) Date of filing: 02.10.2024
(51) Int. Cl.: G06F 3/01, G06F 3/041, G06T 19/00, G02B 27/01, G06F 3/00, H04W 4/80, G06N 3/02, G06V 40/20

(54) **AUGMENTED REALITY DEVICE FOR DETERMINING VALID TOUCH INPUT BY USER AND OPERATION METHOD THEREOF**

(30) Priority: 22.11.2023 KR 20230163784
(71) Applicant: Samsung Electronics Co., Ltd., Suwon-si, Gyeonggi-do 16677 (KR)
(72) Inventor: KHAN, Md. Sazzad Hissain, Suwon-si, Gyeonggi-do 16677 (KR); KOWSER, Aba, Suwon-si, Gyeonggi-do 16677 (KR)
(74) Representative: Appleyard Lees IP LLP
(86) International application number: PCT/KR2024/014980
(87) International publication number: WO 2025/110467

(57) **Abstract**

Provided are: an augmented reality device which determines a valid touch input to a touch interface so that a user can safely and conveniently use the augmented reality device, and prevents an interaction caused by an invalid touch input from being automatically performed; and an operation method thereof. The augmented reality device determines whether a touch input to the touch interface is a valid input resulting from an intention of the user on the basis of sensing data about a movement of a hand, and can determine whether to perform an interaction according to a result of the determination.

## Description

### Technical Field

The present disclosure relates to an augmented reality device for determining a valid touch input and an operation method thereof. More particularly, the present disclosure relates to an augmented reality device and operation method thereof that determines whether a touch input on a touch interface is a valid input based on sensing data obtained through at least one sensor and prevents an interaction caused by an invalid input.

### Background Art

Augmented reality (AR) is a technology for showing a virtual image by overlaying it on a physical environment space of the real world or on a real-world object, and AR devices (e.g., smart glasses) that use AR technology are being effectively used in daily life such as for searching for information, giving directions, taking pictures with a camera, etc. In particular, smart glasses are worn as a fashion item and mainly used for outdoor activities.

An AR device includes a touch interface such as a touch pad, a physical key button, a switch, etc., for receiving touch inputs or tap inputs. Upon receiving a touch input of the user, the touch interface performs an interaction corresponding to the touch input. For example, in response to a touch or tap input on the touch interface being received, the AR device identifies a touch-detected region, displays a graphic user interface (GUI) such as a button, a menu option, etc., corresponding to the identified touch-detected region or provides feedback such as vibrations or notification sound, and performs a function or operation corresponding to the touch or tap input.

Unintentional and unauthorized touch inputs may happen to the touch interface of the AR device. An unauthorized touch input may be a touch input from someone other than the user of the AR device. An unintentional touch input may be a touch input accidentally provided without any intent from the user.

Recently, technologies for providing security and/or personalized access for AR devices have been developed and become widespread. However, there is no solution to prevent unintentional and unauthorized touch inputs on the touch interface while the user is wearing an AR device.

### Disclosure of Invention

### Solution to Problem

An aspect of the present disclosure provides an augmented reality (AR) device that determines whether a touch input is a valid input and performs an interaction according to a result of the determining. According to an embodiment of the present disclosure, an AR device may include at least one sensor, a touch interface configured to receive a touch input, at least one processor including a processing circuit, and memory storing one or more instructions. The one or more instructions may be individually or collectively performed by the at least one processor to cause the AR device to detect a hand movement through the at least one sensor and determine whether the touch input received through the touch interface is a valid input based on the detected hand movement. The one or more instructions may be individually or collectively performed by the at least one processor to cause the AR device to determine whether to perform an interaction corresponding to the touch input based on a result of the determination regarding the valid input.

An aspect of the present disclosure provides a method by which an AR device determines a valid touch input and performs an interaction according to a result of the determining. According to an embodiment of the present disclosure, an operation method of an AR device may include obtaining sensing data regarding a hand movement by using at least one sensor. The operation method of the AR device may include detecting a touch input on a touch interface. The operation method of the AR device may include determining whether the touch input is a valid input based on the obtained sensing data.

Another aspect of the present disclosure provides a computer program product including a computer-readable storage medium. The storage medium may include instructions that are readable to an AR device to cause the AR device to obtain sensing data regarding a hand movement by using at least one sensor; detect a touch input on a touch interface; and determine whether the touch input is a valid input based on the sensing data regarding the hand movement.

### Brief Description of Drawings

The present disclosure may be readily understood by combinations of the following detailed descriptions and the accompanying drawings, and reference numerals refer to structural elements.
FIG. 1 is a diagram for describing an augmented reality (AR) device that determines whether a touch input is a valid input and performs an operation based on a result of the determining, according to an embodiment of the present disclosure.
FIG. 2 is a flowchart illustrating a method by which an AR device determines whether a touch input is a valid input, according to an embodiment of the present disclosure.
FIG. 3 is a flowchart illustrating a method by which an AR device performs an interaction based on whether a touch input is a valid input, according to an embodiment of the present disclosure.
FIG. 4 is a block diagram illustrating components of an AR device, according to an embodiment of the present disclosure.
FIG. 5 illustrates how an AR device detects a hand-raising motion of the user, according to an embodiment of the present disclosure.
FIG. 6 is a flowchart illustrating a method by which an AR device determines whether a touch input is a valid input based on a hand-raising motion of the user, according to an embodiment of the present disclosure.
FIG. 7 illustrates a method by which an AR device detects feature points of hand joints from image frames by using an AI model, according to an embodiment of the present disclosure.
FIG. 8 is a flowchart illustrating a method by which an AR device recognizes a hand-raising motion based on temporal and spatial correlations of joint feature points, according to an embodiment of the present disclosure.
FIG. 9A illustrates an arrangement of a plurality of cameras mounted on an AR device, according to an embodiment of the present disclosure.
FIG. 9B illustrates an arrangement of a plurality of cameras mounted on an AR device, according to an embodiment of the present disclosure.
FIG. 10 illustrates how an AR device recognizes a hand-raising motion by using a plurality of image frames obtained through a plurality of cameras, according to an embodiment of the present disclosure.
FIG. 11 illustrates how an AR device identifies temporal and spatial correlations of feature points of joints detected from a plurality of image frames, according to an embodiment of the present disclosure.
FIG. 12 is a flowchart illustrating a method by which an AR device recognizes a hand-raising motion based on hand depth value information, according to an embodiment of the present disclosure.
FIG. 13 illustrates how an AR device recognizes a hand-raising motion based on hand depth value information, according to an embodiment of the present disclosure.
FIG. 14 is a flowchart illustrating a method by which an AR device determines whether a touch input is a valid input based on sensing data received from a wearable device and performs an interaction based on a result of the determining, according to an embodiment of the present disclosure.
FIG. 15 illustrates how an AR device determines whether a touch input is a valid input based on sensing data received from a wearable device, according to an embodiment of the present disclosure.
FIG. 16A illustrates an example in which a wearable device is located in an acceptable region.
FIG. 16B illustrates an example in which a wearable device is outside an acceptable region.
FIG. 17 is a flowchart illustrating a method by which an AR device determines whether a touch input is a valid input based on electroencephalogram (EEG) signal data obtained by using a brainwave sensor and performs an interaction based on a result of the determining, according to an embodiment of the present disclosure.
FIG. 18 illustrates an example of EEG signal data representing potential fluctuations of brainwaves when a touch input is detected.
FIG. 19 is a flowchart illustrating a method by which an AR device determines whether a touch input is a valid input based on motion information and performs an interaction based on a result of the determining, according to an embodiment of the present disclosure.
FIG. 20A illustrates an example of motion sensing data when a touch input is received.
FIG. 20B illustrates an example of motion sensing data when an adjusting input is received.

### Mode of the Invention

The terms are selected from among common terms widely used at present, taking into account principles of the present disclosure, which may however depend on intentions of those of ordinary skill in the art, judicial precedents, emergence of new technologies, and the like. Some terms as herein used are selected at the applicant's discretion, in which case, the terms will be explained later in detail in connection with embodiments of the present disclosure. Therefore, the terms should be defined based on their meanings and descriptions throughout the present disclosure.

As used herein, the singular forms "a", "an" and "the" are intended to include the plural forms as well, unless the context clearly indicates otherwise. All terms including technical and scientific terms used herein have the same meaning as commonly understood by one of ordinary skill in the art to which this disclosure belongs.

The term "include (or including)" or "comprise (or comprising)" is inclusive or open-ended and does not exclude additional, unrecited elements or method steps. The terms "unit", "module", "block", etc., as used herein each represent a unit for handling at least one function or operation, and may be implemented in hardware, software, or a combination thereof.

In the disclosure, the expression "configured to" as herein used may be interchangeably used with "suitable for", "having the capacity to", "designed to", "adapted to", "made to", or "capable of" according to the given situation. The expression "configured to" may not necessarily mean "specifically designed to" in terms of hardware. For example, in some situations, an expression "a system configured to do something" may refer to "an entity able to do something in cooperation with" another device or parts. For example, "a processor configured to perform A, B and C functions" may refer to a dedicated processor, e.g., an embedded processor for performing A, B and C functions, or a generic-purpose processor, e.g., a Central Processing Unit (CPU) or an application processor that may perform A, B and C functions by executing one or more software programs stored in a memory.

When the term "connected" or "coupled" is used, a component may be directly connected or coupled to another component. However, unless otherwise defined, it is also understood that the component may be indirectly connected or coupled to the other component via another new component.

In the present disclosure, augmented reality (AR) refers to showing a virtual image or both real objects and virtual images in a physical environment space in real world.

In the present disclosure, an AR device is an apparatus capable of representing augmented reality, which may be, for example, not only AR glasses shaped like glasses worn by the user on the face but also a head mounted display apparatus (HMD) or AR helmet worn on the head.

In an embodiment of the present disclosure, the AR device may be replaced by a virtual reality (VR) device.

In the present disclosure, a valid input refers to an input that has the effect of causing the AR device to perform an interaction including an associated function and/or operation, based on a received touch input. In the present disclosure, the AR device may determine whether a touch input on a touch interface is a valid input. In an embodiment of the present disclosure, the valid input may include an authorized input.

In the present disclosure, the authorized input may refer to an input intentionally provided by an authorized user of the AR device to cause the AR device to perform an interaction (e.g., a function or operation) corresponding to the input by touching or tapping the touch interface.

Functions related to artificial intelligence (AI) in the present disclosure are operated through a processor and a memory. The processor may be configured with one or more processors. The one or more processors may include a general-purpose processor such as a CPU, an AP, a digital signal processor (DSP), etc., a dedicated graphic processor such as a GPU and a vision processing unit (VPU), or a dedicated AI processor such as an NPU. The one or more processors control processing of input data according to a predefined operation rule or an AI model stored in the memory. When the one or more processors are the dedicated AI processors, the dedicated AI processors may be designed in a hardware structure specialized in dealing with a particular AI model.

The predefined operation rule or the AI model is characterized by being made by learning. Specifically, the AI model being made by learning refers to the predefined operation rule or the AI model established to perform a desired feature (or object) being made when a basic AI model is trained by a learning algorithm with a lot of training data. Such learning may be performed by a device itself in which AI is performed according to the present disclosure, or by a separate server and/or system. Examples of the learning algorithm may include supervised learning, unsupervised learning, semi-supervised learning, or reinforcement learning, without being limited thereto.

In the present disclosure, the AI model may be made up of a plurality of neural network layers. Each of the plurality of neural network layers may have a plurality of weight values, and perform neural network operation through operation between an operation result of the previous layer and the plurality of weight values. The plurality of weight values owned by the plurality of neural network layers may be optimized by learning results of the AI model. For example, the plurality of weight values may be updated to reduce or minimize a loss value or a cost value obtained by the AI model during a training procedure. The artificial neural network model may include a deep neural network (DNN), for example, a convolutional neural network (CNN), a recurrent neural network (RNN), a restricted Boltzmann machine (RBM), a deep belief network (DBN), a bidirectional recurrent deep neural network (BRDNN), or a deep Q-network, without being limited thereto.

In the present disclosure, 'vision recognition' refers to image signal processing that inputs an image to an AI model, and detects an object from the input image, classifies the object into a certain category or performs object segmentation from the input image through inference using the AI model. In an embodiment of the present disclosure, the vision recognition may refer to image processing that uses an AI model to recognize the user's hand from an image captured by a vision sensor (e.g., a camera) and obtain position information of a plurality of feature points (e.g., joints) included in the hand.

In the present disclosure, a wearable device is a device carried by the user while being worn on the user's body part. For example, the wearable device may be at least one of smart watch, ring, bracelet, anklet, necklace, contact lens, garment-integrated device (e.g., electronic garment), body-attached device (e.g., skin pad) or bio-implantable device (e.g., implantable circuit), but is not limited thereto.

An embodiment of the present disclosure will now be described in detail with reference to accompanying drawings so as to be readily practiced by those of ordinary skill in the art. However, the embodiments of the disclosure may be implemented in many different forms, and not limited thereto as will be discussed herein.

Embodiments of the disclosure will now be described in detail with reference to accompanying drawings.

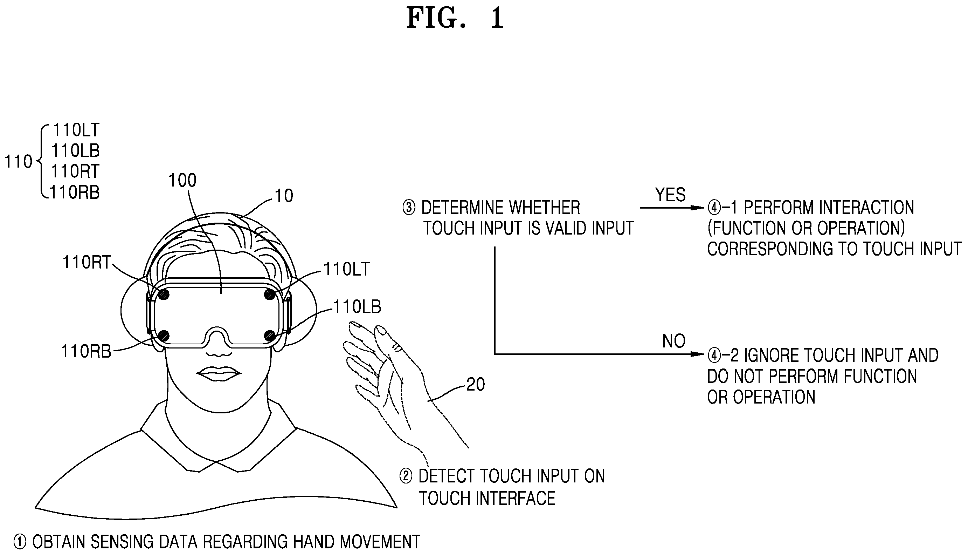

FIG. 1 is a diagram for describing an AR device 100 that determines whether a touch input 20 is a valid input and performs an operation based on a result of the determining, according to an embodiment of the present disclosure.

The AR device 100 is an apparatus capable of representing augmented reality, which may be implemented as a head mounted display apparatus (HMD) or AR helmet worn on the user's head. Although the AR device 100 is shown as an HMD in FIG. 1 for convenience of explanation, it is not limited thereto. For example, the AR device 100 may be configured as AR glasses in the form of eye glasses worn on the user's face.

Referring to FIG. 1, the AR device 100 may include a vision sensor 110 and a touch interface 160. The vision sensor 110 may include a plurality of cameras 110RT, 110RB, 110LT and 110LB. In the embodiment shown in FIG. 1, the vision sensor 110 may include a top-left camera 110LT and a bottom-left camera 110LB disposed on the upper and lower ends of a frame enclosing the left-eye lens of the AR device 100, and a top-right camera 110RT and a bottom-right camera 110RB disposed on the upper and lower ends of a frame enclosing the right-eye lens. The number and positions of the plurality of cameras 111, 112, 113 and 114 included in the vision sensor 110 are merely an example, and are not limited to what are shown in FIG. 1. In an embodiment of the present disclosure, the AR device 100 may include at least two, e.g., three, five, six,..., n cameras.

The touch interface 160 is a hardware input device configured to receive a touch input or tap input from the user or from outside. In an embodiment of the present disclosure, the touch interface 160 may include a touch pad, a touch screen, a physical key button or a switch. In the embodiment shown in FIG. 1, the touch interface 160 may be disposed on one side of the AR device 100, but is not limited thereto.

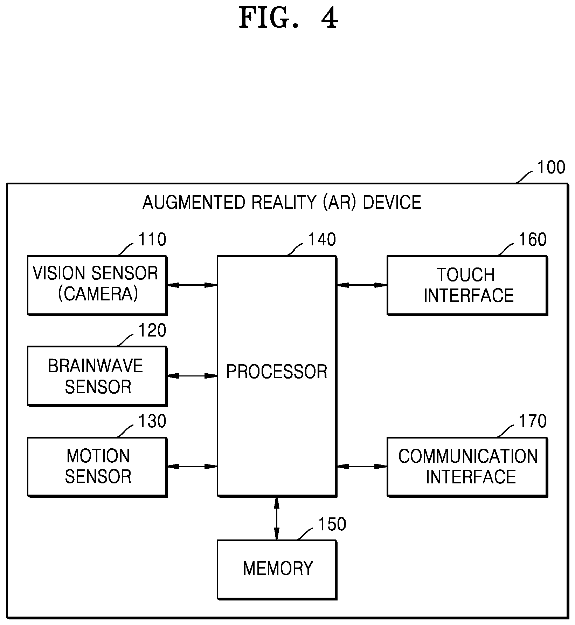

Although not shown in FIG. 1, the AR device 100 may further include other components in addition to the vision sensor 110 and the touch interface 160. In an embodiment of the present disclosure, the AR device 100 may further include a brainwave sensor 120 (see FIG. 4), a motion sensor 130 (see FIG. 4) and a communication interface 160 (see FIG. 4). The components of the AR device 100 will be described in detail in connection with FIG. 4.

The AR device 100 obtains sensing data regarding a hand movement by using at least one sensor including the vision sensor 110, in operation ①.

The AR device 100 detects a touch input 20 on the touch interface 160 from the user or from outside, in operation ②.

The AR device 100 determines whether the touch input 20 is a valid input based on the sensing data regarding the hand movement, in operation ③.

When the touch input 20 is determined as the valid input, the AR device 100 performs an interaction (function or operation) corresponding to the touch input 20, in operation ④-1.

When the touch input 20 is determined as an invalid input, the AR device 100 ignores the touch input 20 and does not perform any function or operation, in operation ④-2.

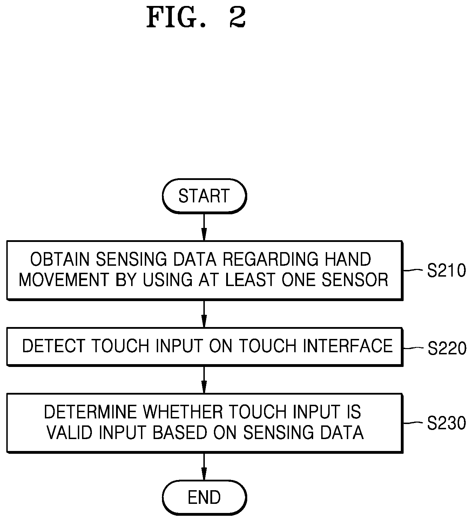

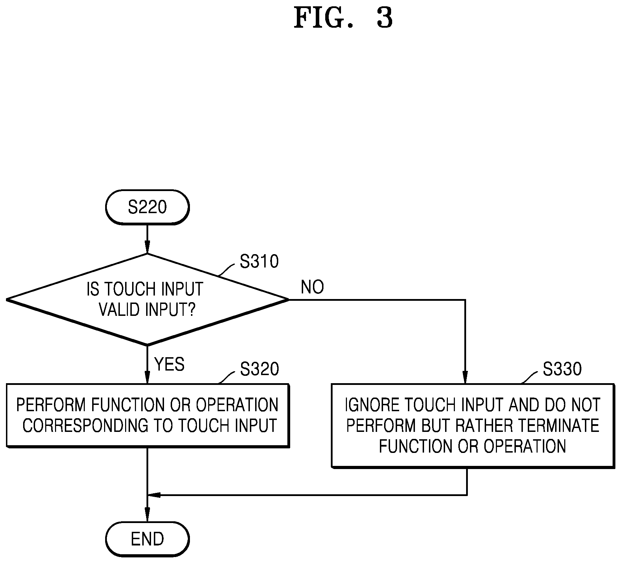

Functions and/or operations of the AR device 100 for determining whether the touch input 20 is a valid input and performing an interaction based on a result of the determining will now be described in detail with reference to FIG. 1 in connection with FIGS. 2 and 3.

FIG. 2 is a flowchart illustrating a method by which the AR device 100 determines whether a touch input is a valid input, according to an embodiment of the present disclosure.

In operation S210, the AR device 100 obtains sensing data regarding a hand movement by using at least one sensor. Also referring to FIG. 1, the AR device 100 may include the vision sensor 110 (see FIG. 1), and obtain a plurality of image frames by photographing the user's hand with the plurality of cameras 110RT, 110RB, 110LT and 110LB (see FIG. 1) included in the vision sensor 110. However, it is not limited thereto, and in an embodiment of the present disclosure, the AR device 100 may include the brainwave sensor 120 (see FIG. 4), and obtain electroencephalogram (EEG) signal data by sensing potential fluctuations of brainwaves from the user's head by using the brainwave sensor 120. In an embodiment of the present disclosure, the AR device 100 may further include a communication interface 170 (see FIG. 4), and receive ultra wide band (UWB) signals or Bluetooth signals from a wearable device worn on the user's hand through the communication interface 170. For example, the AR device 100 may receive angle of arrival (AoA) information from the UWB signal or Bluetooth low energy (BLE) position information from the Bluetooth signal. However, it is not limited thereto.

In an embodiment of the present disclosure, the AR device 100 may include a motion sensor 130 (see FIG. 4), and obtain motion information regarding a vibration or movement of the AR device 100 through the motion sensor 130.

In an embodiment of the present disclosure, the AR device 100 may input the plurality of image frames obtained through the plurality of cameras 110RT, 110RB, 110LT and 110LB included in the vision sensor 110 to an AI model, and detect feature points of hand joints from the plurality of image frames by performing vision recognition using the AI model. In an embodiment of the present disclosure, the AI model may be implemented as a deep neural network (DNN) model trained to recognize an object (e.g., the user's hand) from the input image data and recognize feature points (e.g., joints) of the object. In the present disclosure, the DNN model may be an end-to-end model trained by a supervised learning method that applies tens of thousands or hundreds of millions of images as input data and applies feature points of hand joints included in the input data as ground truths. The DNN model may be implemented with, for example, a convolutional neural network (CNN) model, but is not limited thereto. The DNN model may be implemented with, for example, a recurrent neural network (RNN), a restricted Boltzmann machine (RBM), a deep Belief network (DBN), a bidirectional recurrent deep neural network (BRDNN) or a deep Q-network. The AR device 100 may recognize a hand-raising motion based on the movement of the detected feature points over time.

The AR device 100 may obtain position information of the user's hand based on the sensing data received from an external device, e.g., a wearable device worn on the user's hand. In an embodiment of the present disclosure, the AR device 100 may obtain a relative positional relationship between the user's hand and the AR device 100 based on a UWB signal or Bluetooth signal received from the wearable device. In the present disclosure, the relative positional relationship may include at least one of a distance, a direction and an orientation between the user's hand wearing the wearable device and the AR device 100.

The AR device 100 may obtain biometric information about brainwaves of the user from EEG signal data obtained through the brainwave sensor 120 (see FIG. 4). In an embodiment of the present disclosure, the AR device 100 may identify negative feedback of the brainwave potential based on the EEG signal data.

In operation S220, the AR device 100 may detect a touch input on the touch interface 160 (see FIG. 1). The touch input on the touch interface 160 may be an input from the user, but is not limited thereto. The touch interface 160 may receive an unauthorized touch input from someone else rather than the authorized user who wears the AR device 100.

In operation S230, the AR device 100 may determine whether the touch input is a valid input based on the sensing data. In the present disclosure, a valid input refers to an input that has the effect of causing the AR device 100 to perform an interaction including a function and/or operation corresponding to the touch input. In an embodiment of the present disclosure, the valid input may include an authorized input intended by the user.

In an embodiment in which a hand-raising motion is recognized from the plurality of image frames, when a touch input is detected within a preset period of time from a point of time when the hand-raising motion is recognized, the AR device 100 may determine the touch input as an authorized input intended by the user.

In an embodiment in which sensing data is obtained from the wearable device and a relative positional relationship between the user's hand and the AR device 100 is obtained based on the sensing data, the AR device 100 may identify whether the user's hand is located in a preset acceptable region based on the relative positional relationship, and determine whether the touch input is a valid input based on a result of the identifying. For example, when the user's hand is located in a region within a preset distance, e.g., 5 centimeters (cm), from the AR device 100, the AR device 100 may determine the touch input as an authorized input intended by the user.

In an embodiment where EEG signal data is obtained from the brainwave sensor 120, the AR device 100 may identify negative feedback of brainwave potential of the user, e.g., error-related negativity (ERN), from the EEG signal data, and determine whether the touch input is a valid input based on a result of the identifying. For example, when ERN is identified within the preset period of time from a point of time when the touch input is received, the AR device 100 may determine the touch input as an authorized input. The preset period of time may be, for example, at least 50 ms to 100 ms. However, it is not limited thereto.

A method by which the AR device 100 performs an interaction according to a result of determining whether a touch input is a valid input will be described in detail with reference to FIG. 3.

FIG. 3 is a flowchart illustrating a method by which the AR device 100 performs an interaction based on whether a touch input is a valid input, according to an embodiment of the present disclosure.

In operation S310, the AR device 100 determines whether a touch input is a valid input intended by the user. A specific method of the determining is the same as what is described in operation S230 of FIG. 2, so redundant descriptions are omitted.

When the touch input is determined as the valid input in operation S320, the AR device 100 performs a function or operation corresponding to the touch input. In an embodiment of the present disclosure, when the touch input is determined as an authorized input intended by the user, the AR device 100 may perform an interaction corresponding to the touch input.

When the touch input is determined as an invalid input in operation S330, the AR device 100 ignores the touch input and does not perform but rather terminates a function or operation. In an embodiment of the present disclosure, when the touch input is determined as an unintentional and unauthorized input, the AR device 100 may not perform an interaction corresponding to the touch input.

The unintentional and unauthorized input may happen on the touch interface 160 (see FIG. 1) of the AR device 100. In the present disclosure, an unauthorized touch input may be a touch input from someone else rather than the user of the AR device 100. For example, unauthorized touch inputs by outsiders may occur, such as when the user is watching a movie through the AR device 100 and a family member makes a touch input for pausing or window-closing, or when a navigation application is running through the AR device 100 in a crowded place and a stranger accidentally triggers a touch input that terminates the navigation application. Moreover, when a multi-player virtual reality (VR) game is being enjoyed by using the AR device 100, an unauthorized external touch input may occur, such as when another player accidentally touches the touch interface 160 during game play or physical activity, causing the game to be temporarily suspended. In the present disclosure, an unintentional touch input may be a touch input accidentally provided without the user's intent to provide the touch input. For example, unintentional touch inputs may occur, such as when the user mistakenly puts his/her hand on the touch interface 160 of the AR device 100 while trying to modify his/her hair style or when the user touches the touch interface 160 while reaching to an object on a shelf.

Recently, technologies for providing security and/or personalized access for the AR device 100 have been developed and become widespread. However, there is no solution to prevent the unintentional and unauthorized touch inputs on the touch interface 160 while the user is wearing the AR device 100.

The disclosure is to provide the AR device 100 and operation method thereof that determines a valid touch input on the touch interface 160 and prevents an interaction according to an unintentional and unauthorized touch input, i.e., an invalid input, from being automatically performed so that the user is able to safely and conveniently use the AR device 100.

In the embodiments as shown and described through FIGS. 1 to 3, the AR device 100 may obtain sensing data regarding a hand movement through a vision sensor, a brainwave sensor or an external sensor (e.g., UWB, Bluetooth, etc., of a wearable device), determine whether a touch input is a valid input based on the sensing data regarding the hand motion when the touch input is detected by the touch interface 160, and ignore the touch input when it is determined as an invalid input based on a result of the determining and do not perform an interaction corresponding to the touch input. The AR device 100 according to an embodiment of the present disclosure may prevent a touch input mistakenly provided by the user, enhancing comfort and immersion and improving the user experience (UX). Furthermore, the AR device 100 according to an embodiment of the present disclosure may prevent an interaction caused by an unauthorized touch input from an unauthorized outsider from being automatically performed, thereby blocking the leakage of sensitive data such as personal information, which leads to technical effects of strengthening security.

The AR device 100 according to an embodiment of the present disclosure may detect the surrounding environment, and ignore, automatically or by user inputs, unintentional and unauthorized touch inputs determined as invalid inputs when a crowded environment (e.g., in concert or subway) is detected, thereby realizing personalized automatic authentication.

FIG. 4 is a block diagram illustrating components of the AR device 100, according to an embodiment of the present disclosure.

Referring to FIG. 4, the AR device 100 may include the vision sensor 110, the brainwave sensor 120, the motion sensor 130, a processor 140, memory 150, the touch interface 160, and the communication interface 170. The vision sensor 110, the brainwave sensor 120, the motion sensor 130, the processor 140, the memory 150, the touch interface 160 and the communication interface 170 may be electrically and/or physically connected to one another. Components for describing an operation of the AR device 100 are shown in FIG. 4, but components included in the AR device 100 are not limited to those shown in FIG. 4. The AR device 100 may not include some of the components shown in FIG. 4. In an embodiment of the present disclosure, the AR device 100 may not include the brainwave sensor 120. In an embodiment of the present disclosure, the AR device 100 may not include the motion sensor 130. Furthermore, in an embodiment of the present disclosure, the AR device 100 may not include either the brainwave sensor 120 or the motion sensor 130.

In an embodiment of the present disclosure, the AR device 100 may be implemented as a portable device, in which case the AR device 100 may further include a battery for supplying operation power to the vision sensor 110, the brainwave sensor 120, the motion sensor 130, the processor 140, the touch interface 160 and the communication interface 170.

The vision sensor 110 is configured to obtain a hand image by photographing the real space and the hand in the real space. The vision sensor 110 may include one or more cameras. The camera may include a lens module, an image sensor and an image processing module. The camera may obtain a still image or a video of an object through the image sensor (e.g., CMOS or CCD). The video may include a plurality of image frames continuously obtained by photographing the object through the camera. The image processing module may encode a still image having a single image frame or video data comprised of a plurality of image frames obtained through the image sensor and send it to the processor 140.

In an embodiment of the present disclosure, the vision sensor 110 may be implemented as a small form factor to be mounted on the portable AR device 100 and may be implemented as a light-weighted RGB camera that consumes low power. However, it is not limited thereto, and the vision sensor 110 may include a depth camera such as a stereo camera, a time-of-flight (ToF) camera or an infrared (IR) camera.

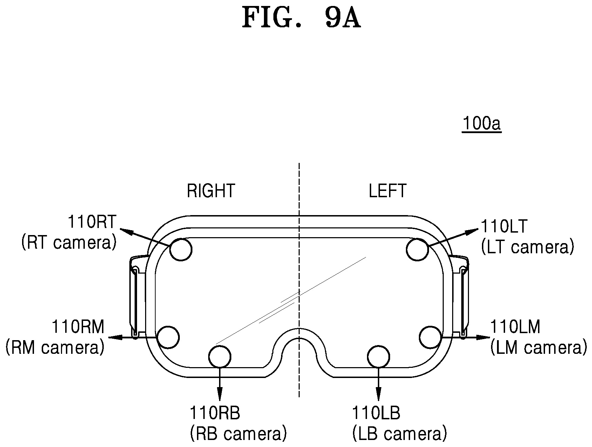

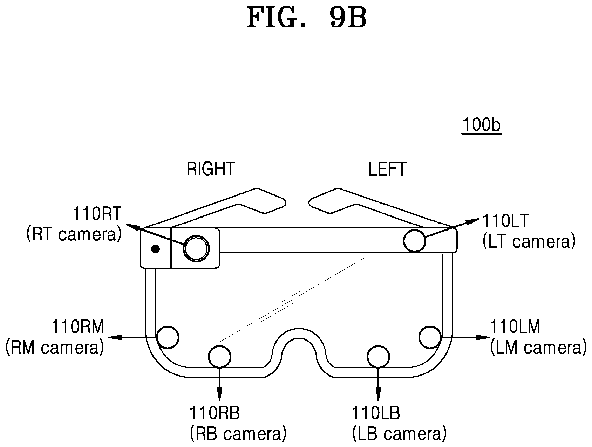

The vision sensor 110 may include two or more cameras. For example, when the AR device 100 is implemented as an HMD or AR glasses, the vision sensor 110 may include a total of six cameras including a top-left camera, a left-middle camera and a bottom-left camera disposed at the top, middle and bottom of the frame enclosing the left-eye lens, respectively, and a top-right camera, a right-middle camera and a bottom-right camera disposed at the top, middle and bottom of the frame enclosing the right-eye lens, respectively. Positions of the plurality of cameras included in the vision sensor 110 disposed on the AR device 100 will be described in detail in connection with FIGS. 9A and 9B. However, the number and positions of the plurality of cameras are not limited to the above example.

The vision sensor 110 may obtain a plurality of image frames including the user's hand by photographing the hand in a real space through the plurality of cameras.

The brainwave sensor 120 may include an EEG sensor configured to obtain EEG signal data by sensing potential fluctuations of brainwaves. In an embodiment of the present disclosure, the brainwave sensor 120 may detect an event-related potential (ERP) component including at least one of a feedback-related negativity (ERP-FRN) component and a feedback-related positivity (ERP-FRP) component by monitoring potential fluctuations of brainwaves based on the EEG signal data. The brainwave sensor 120 may provide the detected ERP component to the processor 140.

The motion sensor 130 is a sensor configured to sense motion information regarding a movement of the AR device 100. In an embodiment of the present disclosure, the motion sensor 130 may obtain the motion information by sensing a vibration or movement of the AR device 100 when a user input or an unauthorized input from an outsider is applied to the AR device 100. The motion sensor 130 may provide the obtained motion information to the processor 140.

The processor 140 may execute one or more instructions of a program stored in the memory 150. The processor 140 may include hardware components for performing arithmetic, logical, and input/output operations and image processing. The processor 140 is shown as one element in FIG. 4, but is not limited thereto. In an embodiment of the present disclosure, the processor 140 may be configured with one or more elements. One or more processors included in the processor 140 may be circuitries such as system on chips (SoCs), integrated circuits (ICs), etc. For example, the processor 140 may be a general-purpose processor such as a central processing unit (CPU), an application processor (AP), a digital signal processor (DSP), etc., a dedicated graphic processor such as a graphic processing unit (GPU), a vision processing unit (VPU), etc., or a dedicated artificial intelligence (AI) processor such as a neural processing unit (NPU).

The processor 140 may include various processing circuits and/or a plurality of processors. For example, the term 'processor' used in the present disclosure including claims may include various processing circuits including at least one processor. One or more of the at least one processor may be configured to individually and/or collectively perform various functions in a distributed fashion, as described in the present disclosure. As herein used, the processor, at least one processor or one or more processors may be configured to perform various functions. However, these terms cover, without limitation, a situation in which one processor may perform some of the functions while other processor(s) perform some other functions, and a situation in which a single processor may perform all the functions. Furthermore, the at least one processor may include a combination of processors that perform the disclosed various functions in a distributed fashion. The at least one processor may execute program instructions to fulfill or perform various functions.

The processor 140 may control processing of input data according to a predefined operation rule or an AI model. When the processor 140 is the dedicated AI processor, the dedicated AI processor may be designed in a hardware structure specialized for processing a particular AI model.

The memory 150 may include, for example, at least one type of storage media including a flash memory, a hard disk, a multimedia card micro type memory, a card type memory (e.g., SD or XD memory), a random access memory (RAM), a static random access memory (SRAM), a read-only memory (ROM), an electrically erasable programmable read-only memory (EEPROM), a programmable read-only memory (PROM), or an optical disk.

The memory 150 may include instructions related to functions and/or operations in which the AR device 100 obtains sensing data regarding a hand movement from at least one of the vision sensor 110, the brainwave sensor 120 and the motion sensor 130, obtains at least one of hand movement information, position information and biometric information based on the obtained sensing data, and determines whether a touch input on the touch interface 160 is a valid input based on at least one of the hand movement information, position information and biometric information. In an embodiment of the disclosure, the memory 150 may store at least one of algorithms, data structures, program codes, application programs, and instructions that are readable by the processor 140. The instructions, algorithms, data structures and program codes stored in the memory 150 may be implemented in e.g., a programming or scripting language such as C, C++, Java, assembler, etc.

The processor 140 may be implemented by executing the instructions or program codes stored in the memory 150. Functions and/or operations performed when the processor 140 executes the instructions or program codes of each of the plurality of modules stored in the memory 150 will now be described in detail.

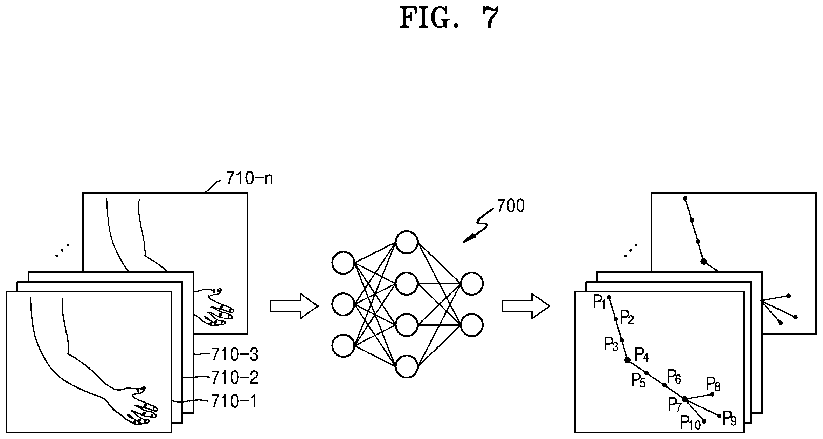

The processor 140 may obtain sensing data regarding a hand movement from at least one of the vision sensor 110, the brainwave sensor 120 and the motion sensor 130, and obtain at least one of the hand movement information, position information and biometric information based on the obtained sensing data. In an embodiment of the present disclosure, the processor 140 may obtain a plurality of image frames obtained by photographing the hand with the plurality of cameras included in the vision sensor 110. The processor 140 may input the plurality of image frames obtained by the plurality of cameras to an AI model, and detect feature points of the hand joints from the plurality of image frames by performing vision recognition using the AI model. In an embodiment of the present disclosure, the AI model may be implemented as a DNN model trained to recognize an object (e.g., the user's hand) from the input image data and recognize feature points (e.g., joints) of the object. The AI model will be described in detail in connection with FIG. 7.

The processor 140 may continuously obtain a plurality of image frames from the vision sensor 110 over time, and recognize a hand-raising motion based on the movement of feature points detected from the plurality of continuously obtained image frames over time. A specific embodiment where the processor 140 detects feature points from the plurality of image frames obtained through the vision sensor 110 and recognizes a hand-raising motion based on the detected feature points will be described in detail in connection with FIGS. 7 to 11.

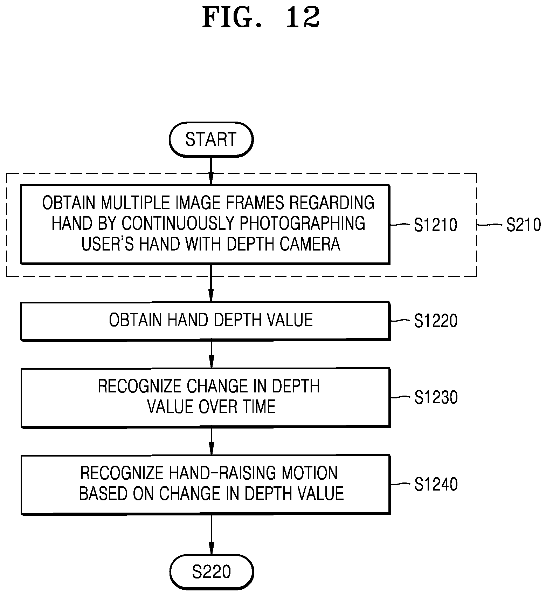

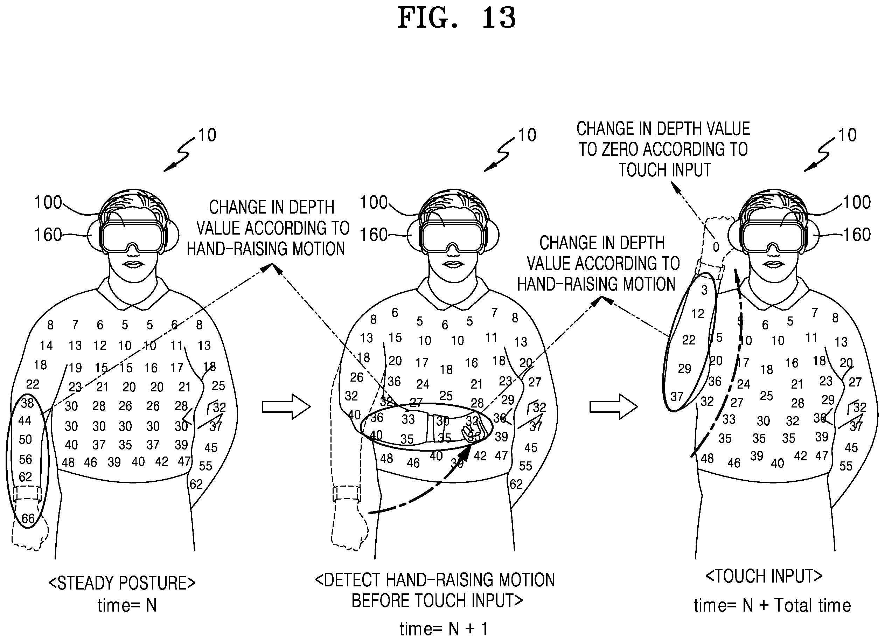

In an embodiment of the present disclosure, the vision sensor 110 may include a depth camera configured to obtain a depth value of an object, and the processor 140 may obtain a plurality of image frames by photographing the hand through the depth camera over time and obtain a depth value of the hand (or hand depth value) from the obtained plurality of image frames. The processor 140 may detect changes of the obtained depth value over time, and recognize a hand-raising motion based on the change in depth value. A specific embodiment where the processor 140 obtains a hand depth value from a plurality of image frames obtained through the depth camera and recognizes a hand-raising motion based on a change in depth value over time will be described in detail in connection with FIGS. 12 and 13.

In an embodiment of the present disclosure, the processor 140 may obtain a UWB signal or Bluetooth signal from a sensor of a wearable device through the communication interface 170. The wearable device may be a device carried by the user while being worn on the user's body part, for example, a smart watch to be worn around the user's hand. However, it is not limited thereto, and for example, the wearable device may include a smart ring, bracelet, anklet, necklace, contact lens, garment-integrated device (e.g., electronic garment), body-attached device (e.g., skin pad) or bio-implantable device (e.g., implantable circuit). In an embodiment of the present disclosure, the wearable device may include a UWB communication module or a Bluetooth communication module, and the processor 140 may receive angle-of-arrival (AoA) information in a UWB signal or BLE position information in a Bluetooth signal from the wearable device through the communication interface 170. The processor 140 may obtain a relative positional relationship between the user's hand and the AR device 100 based on the received AoA information or BLE position information. In an embodiment of the present disclosure, the relative positional relationship may include at least one of a distance, a direction and an orientation between the user's hand wearing the wearable device and the AR device 100.

In an embodiment of the present disclosure, the processor 140 may obtain EEG signal data by sensing potential fluctuations of brainwaves from the user's head through the brainwave sensor 120.

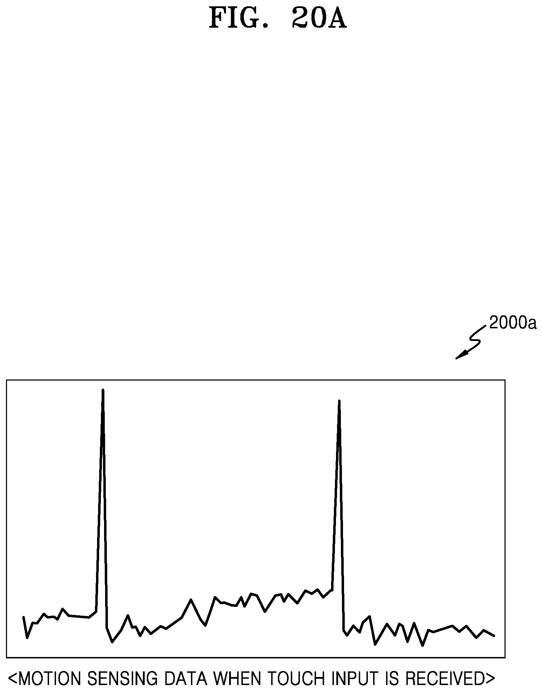

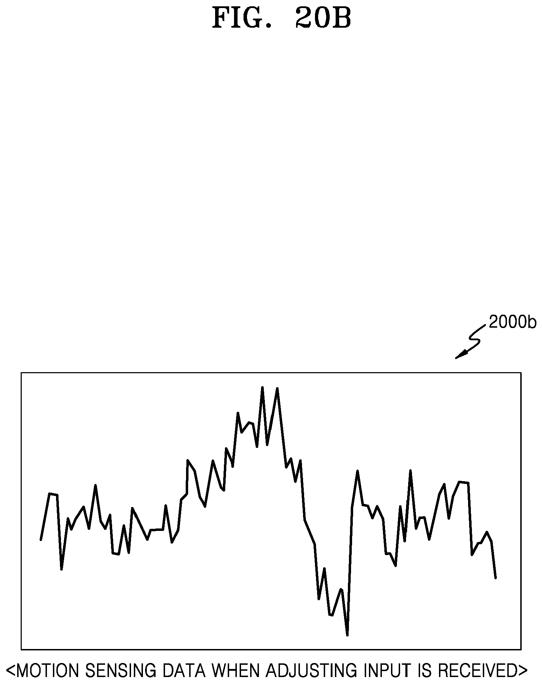

In an embodiment of the present disclosure, the processor 140 may obtain motion information regarding a movement of the AR device 100 through the motion sensor 130. When the touch interface 160 receives, from the user, an adjusting input to adjust the AR device 100 by changing setting information or an option, a vibration or movement may occur in the AR device 100. When the adjusting input from the user is detected through the touch interface 160, the processor 140 may obtain motion information regarding the vibration or movement that occurs in the AR device 100. Motion sensing data regarding each of a case that a general touch input is input and a case that an adjusting input is input will be described in detail in connection with FIGS. 20A and 20B.

The processor 140 may determine whether a touch input detected by the touch interface 160 is a valid input based on at least one of movement (e.g., hand-raising motion) information, position information and biometric information (e.g., EEG signal data) of the hand. In an embodiment of the present disclosure, the processor 140 may determine whether the touch input is an authorized input intended by the user based on at least one of the hand movement information, the position information and the biometric information. In an embodiment where the hand movement information, e.g., the hand-raising motion, is recognized, when detecting a touch input on the touch interface 160 within a preset period of time from a point of time when the hand-raising motion is recognized, the processor 140 may determine the touch input as an input provided with an intent of the user, i.e., a valid input. In this case, the processor 140 may perform an interaction corresponding to the touch input. For example, a function and/or operation such as execution of an application, menu selection or option alteration caused by the touch input may be performed. When detecting a touch input after a lapse of a preset period of time from a point of time when the hand-raising motion is detected, the processor 140 may determine the touch input as an unintentional and unauthorized input, i.e., an invalid input. In this case, the processor 140 may ignore the touch input and may not perform a function and/or operation corresponding to the touch input.

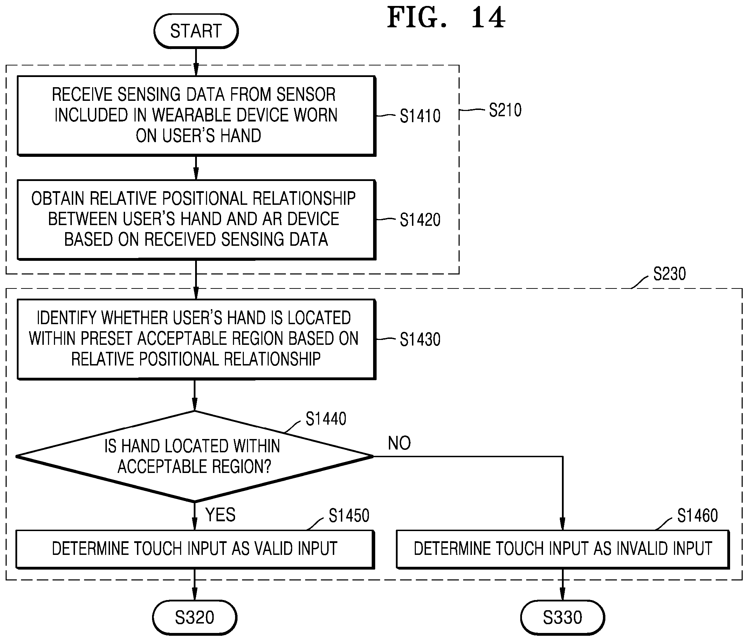

In an embodiment in which sensing data is obtained from the wearable device and position information of the user's hand is obtained based on the sensing data, the processor 140 may identify whether the user's hand is located in a preset acceptable region based on relative positional relationship between the user's hand and the AR device 100, and determine whether the touch input is a valid input based on a result of the identifying. For example, when the user's hand is located in a region within a preset distance, e.g., 5 cm, from the AR device 100, the processor 140 may determine the touch input as an authorized input intended by the user, i.e., a valid input. In this case, the processor 140 may perform an interaction corresponding to the touch input. On the other hand, for example, when the user's hand is located in a region beyond the preset distance or outside a preset angle range from the AR device 100, the processor 140 may determine the touch input as an unintentional and unauthorized input, i.e., an invalid input. In this case, the processor 140 may ignore the touch input and may not perform a function and/or operation corresponding to the touch input. A specific embodiment in which the AR device 100 determines whether the touch input is an authorized input based on the sensing data obtained from the wearable device and performs an interaction based on a result of the determining will be described in detail in connection with FIGS. 14 to 16B.

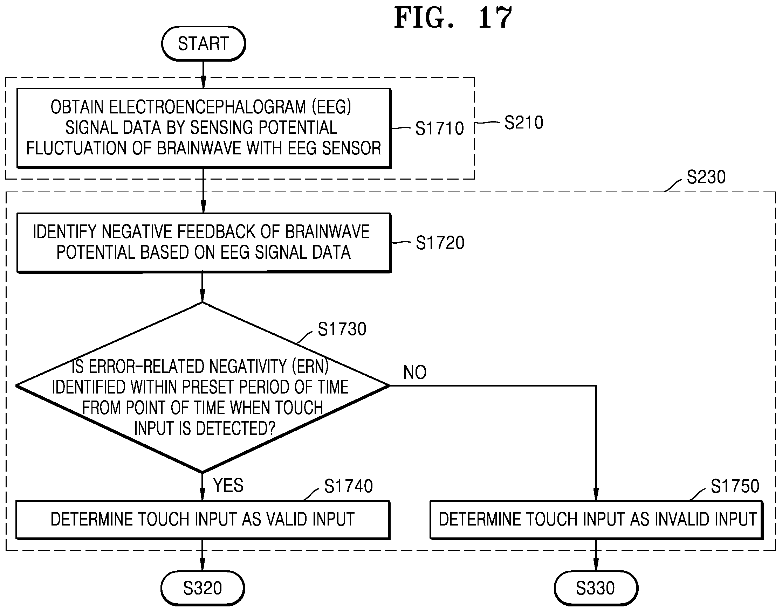

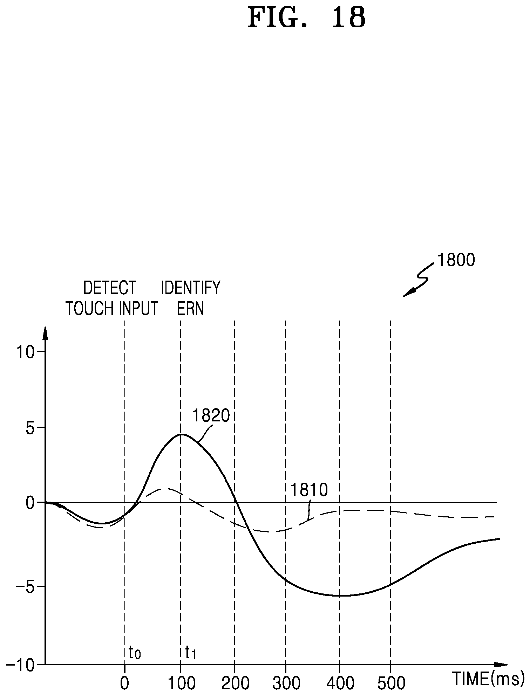

In an embodiment where biometric information, e.g., EEG signal data, is obtained from the brainwave sensor 120, the processor 140 may identify negative feedback of brainwave potential of the user, e.g., error-related negativity (ERN), from the EEG signal data, and determine, based on a result of the identifying, whether the touch input is a valid input. In an embodiment of the present disclosure, when ERN is identified within a preset period of time from at a point of time when a touch input is detected by the touch interface 160, the processor 140 may determine the touch input as an authorized input. The preset period of time may be, for example, at least 50 ms to 100 ms. However, it is not limited thereto. When a touch input is determined as an authorized input, the processor 140 may perform an interaction corresponding to the touch input. On the other hand, for example, when ERN is not identified even after a lapse of the preset period of time from at the point of time when the touch input is detected, the processor 140 may determine the touch input as an unintentional and unauthorized input, i.e., an invalid input. In this case, the processor 140 may ignore the touch input and may not perform a function and/or operation corresponding to the touch input. A specific embodiment in which the AR device 100 determines whether a touch input is an authorized input based on the biometric information (e.g., EEG signal data) obtained through the brainwave sensor 120 and performs an interaction based on a result of the determining will be described in detail in connection with FIGS. 17 and 18.

In an embodiment of obtaining motion information of the AR device 100 from the motion sensor 130, when motion information is obtained through the motion sensor 130 after touch input is detected, the processor 140 may determine the touch input as unintentional and unauthorized input. In this case, the processor 140 may ignore the touch input and may not perform a function and/or operation corresponding to the touch input.

The touch interface 160 is a hardware input device configured to receive a touch input or tap input from the user or from an outsider. In an embodiment of the present disclosure, the touch interface 160 may include a touch pad, a touch screen, a physical key button or a switch. The touch interface 160 may detect a touch input and provide information regarding the detected touch input to the processor 140.

The communication interface 170 is a hardware device configured to transmit or receive data to or from a server or an external device over a cable or wireless communication network. The communication interface 170 may perform data communication with a server or external electronic device by using at least one of data communication schemes including, for example, a cable wireless local area network (LAN), a wireless LAN, Wi-Fi, Bluetooth, Bluetooth low energy (BLE), zigbee, Wi-Fi direct, infrared data association (IrDA), near field communication (NFC), wireless broadband Internet (Wibro), world interoperability for microwave access (WiMAX), shared wireless access protocol (SWAP), wireless gigabit alliance (WiGig) and radio frequency (RF) communication.

In an embodiment of the present disclosure, the communication interface 170 may include a UWB communication module for performing UWB communication. In the present disclosure, the UWB communication refers to a communication scheme that performs data transmission and reception using a ultra wideband frequency band between 3.1 GHz and 10.6 GHz. A UWB communication network may transmit or receive data at up to 500 Mbps.

However, it is not limited thereto, and when the AR device 100 is implemented as a carriable device to be worn on the user's body part, such as AR glasses or HMD, the communication interface 170 may perform data transmission and reception with a server or external device over a network that conforms to a mobile communication standard such as CDMA, WCDMA, 3G, 4G (LTE), 5G Sub-6, and/or a communication scheme using millimeter waves (mmWave).

In an embodiment of the present disclosure, the communication interface 170 may receive a UWB signal or Bluetooth signal from a wearable device worn around the user's hand under the control of the processor 140. The communication interface 170 may provide the received UWB signal or Bluetooth signal to the processor 140.

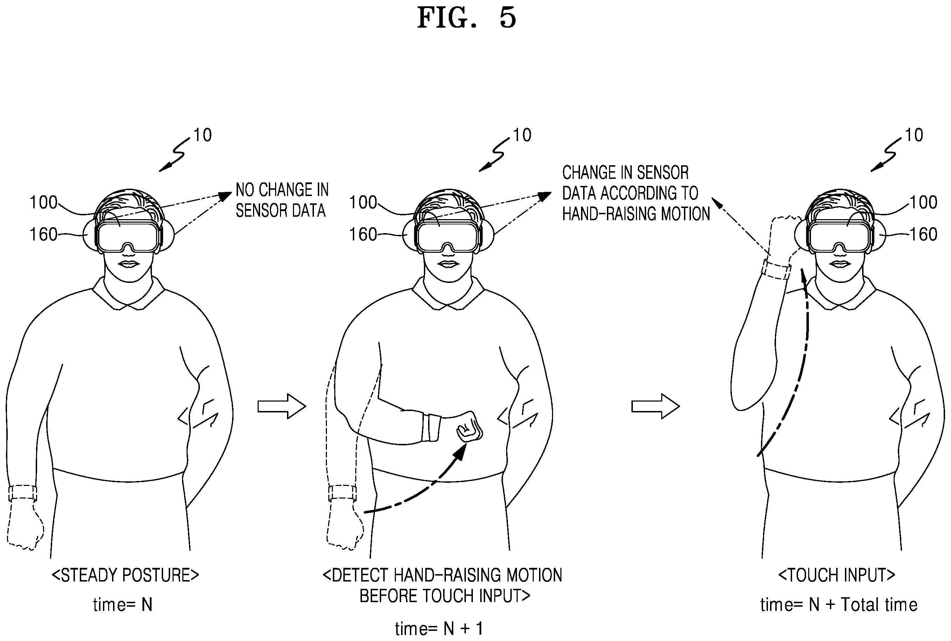

FIG. 5 illustrates how the AR device 100 detects a hand-raising motion of a user 10, according to an embodiment of the present disclosure.

Referring to FIG. 5, the user 10 who wears the AR device 100 may maintain a steady posture at a first point of time (t=N) and then perform a hand-raising motion at a second point of time (t=N+1). The AR device 100 may obtain a plurality of image frames by photographing the hand of the user 10 with the vision sensor 110 (see FIGS. 1 and 4) including the plurality of cameras, and detect feature points of joints included in the hand from the obtained plurality of image frames. The AR device 100 may detect the feature points of the hand joints from the plurality of image frames continuously obtained through the vision sensor 110 over time, and recognize a hand-raising motion based on the movement of the detected feature points over time.

When a touch input on the touch interface 160 is detected within a preset period of time from a point of time when the hand-raising motion is recognized, i.e., the second point of time, the AR device 100 may determine the touch input as an authorized input intended by the user. In an embodiment shown in FIG. 5, when a touch input that touches or taps the touch interface 160 is received at a third point of time (t= N + total time) before a lapse of a preset period of time from the second point of time (t=N), the AR device 100 may determine the touch input as an authorized input.

On the other hand, when a touch input that touches or taps the touch interface 160 is received after a lapse of the preset period of time from the second point of time (t=N), the AR device 100 may determine the touch input as an unintentional and unauthorized input. When the touch input is determined as the unintentional and unauthorized input, the AR device 100 may ignore the touch input and may not perform an interaction corresponding to the touch input.

The AR device 100 may recognize a hand-down motion based on a movement of feature points of hand joints detected from the plurality of image frames. In an embodiment of the present disclosure, when the hand-down motion is recognized, the AR device 100 may determine all the detected touch inputs as unauthorized inputs until a hand-raising motion is recognized later again.

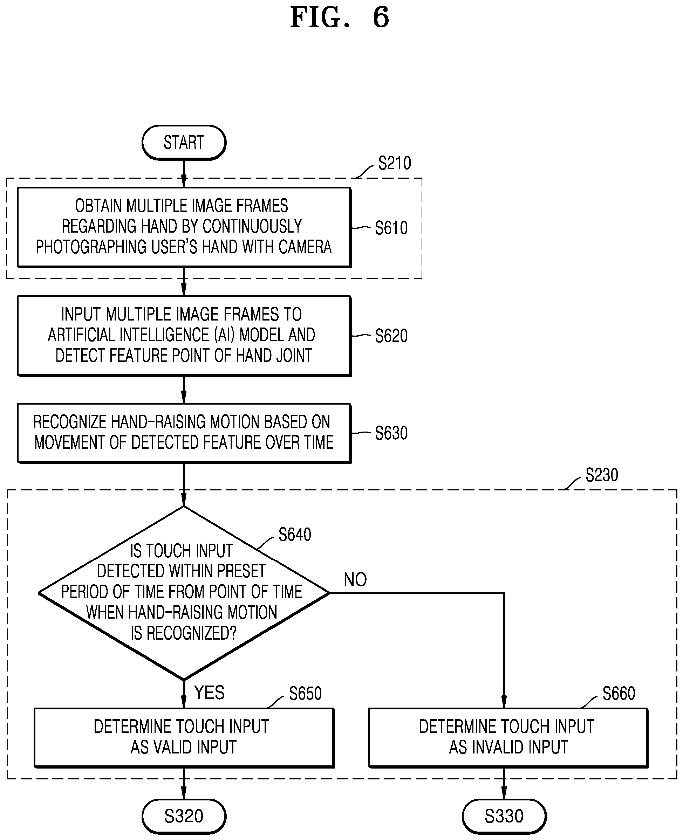

FIG. 6 is a flowchart illustrating a method by which the AR device 100 determines whether a touch input is a valid input based on a hand-raising motion of the user, according to an embodiment of the present disclosure.

FIG. 7 illustrates how the AR device 100 detects hand joint features P₁ to P₁₀ from a plurality of image frames 710-1 to 710-n by using an AI model 700, according to an embodiment of the present disclosure.

Referring to FIGS. 6 and 7, functions and/or operations in which the AR device 100 according to an embodiment of the present disclosure recognizes a hand-raising motion from the plurality of image frames 710-1 to 710-n and determines whether a touch input is a valid input based on the hand-raising motion will be described in detail.

Operation S610 of FIG. 6 is a detailed operation of operation S210 shown in FIG. 2. In operation S610, the AR device 100 obtains a plurality of image frames regarding the user's hand by continuously photographing the hand by using a camera. In an embodiment of the present disclosure, the vision sensor 110 (see FIGS. 1 and 4) of the AR device 100 may include a plurality of cameras. Also referring to FIG. 7, the AR device 100 may obtain the plurality of image frames 710-1 to 710-n by continuously photographing the user's hand with the plurality of cameras. In an embodiment of the present disclosure, the plurality of image frames 710-1 to 710-n may include images of not only the user's hand but also at least one of the user's wrist, elbow, arm or shoulder.

In operation S620 of FIG. 6, the AR device 100 detects feature points of the hand joints by inputting the plurality of image frames to the AI model. In the present disclosure, a joint refers to a portion where a plurality of bones included in the hand and arm are connected to each other. In the present disclosure, a feature point may refer to a point easy to identify or distinguish from the surrounding background in the image. The feature points of hand joints may include, for example, feature points of wrist joints, feature points of palm joints, feature points of forearm or feature points of upper arm.

Also referring to FIG. 7, the processor 140 (see FIG. 4) of the AR device 100 may input the plurality of image frames 710-1 to 710-n to the AI model 700, and detect the feature points P₁ to P₁₀ of the joints from the plurality of image frames 710-1 to 710-n by performing inferencing using the AI model 700. In an embodiment of the present disclosure, the AI model may be implemented as a DNN model trained to recognize an object (e.g., the user's hand) from the input image data and recognize feature points (e.g., joints) of the object. In the present disclosure, the DNN model may be a model trained by a supervised learning method that applies tens of thousands or hundreds of millions of images as input data and applies feature points of hand joints included in the input data as ground truths.

The AI model 700 may include, for example, a three dimensional (3D) feature extractor block that is an architecture of the hand joints, a feature transform layer (FTL) that generates 3D features and a pose regression block that recognizes a pose based on the features of the skeleton. The pose regression block may be implemented as a known skeleton regressor, e.g., Regressor-K. When the plurality of image frames 710-1 to 710-n are input to the AI model 700, the feature points P₁ to P₁₀ of hand joints may be extracted through the 3D feature extractor block, the extracted feature points P₁ to P₁₀ may be transformed into 3D feature points z^{3D} by the FTL, the transformed 3D feature points z^{3D} may be input to the pose regression block and z^{R} including 3D information, temporal context and skeleton features may be output by the pose regression block. The skeleton regressor, Regressor-K may predict a 3D hand pose when receiving an input of z^{R}. In an embodiment of the present disclosure, the AI model 700 may be an end-to-end DNN model trained to predict the 3D hand pose of the hand joints through the 3D feature extractor block, the FTL, the pose regression block and the skeleton regressor (Regressor-K) when an image is input.

Referring to FIG. 6 again, in operation S630, the AR device 100 may recognize a hand-raising motion based on the movement of the detected feature points over time. Also referring to FIG. 7, the processor 140 of the AR device 100 may recognize the hand-raising motion based on a 3D hand pose output through the AI model 700.

Although not shown in FIG. 6, operation S630 may be followed by operation S220 shown in FIG. 2.

Operations S640 to S660 of FIG. 6 are detailed operations of operation S230 shown in FIG. 2. In operation S640, the AR device 100 determines whether a touch input is detected within a preset period of time from a point of time when a hand-raising motion is recognized.

When as a result of the determining, a touch input is detected within the preset period of time from the point of time when the hand-raising motion is recognized in operation S650, the AR device 100 determines the touch input as a valid input. In an embodiment of the present disclosure, when a touch input is detected within the preset period of time from the point of time when the hand-raising motion is recognized, the AR device 100 may determine the touch input as an authorized input intended by the user. When the touch input is determined as an authorized input in operation S320, the AR device 100 performs a function or operation corresponding to the touch input.

When as a result of the determining, a touch input is detected after a lapse of the preset period of time from the point of time when the hand-raising motion is recognized in operation S660, the AR device 100 determines the touch input as an invalid input. In an embodiment of the present disclosure, when a touch input is detected after a lapse of the preset period of time from the point of time when the hand-raising motion is recognized, the AR device 100 may determine the touch input as an unintentional and unauthorized input. When the touch input is determined as the unintentional and unauthorized input in operation S330, the AR device 100 ignores the touch input and does not perform but rather terminates a function or operation.

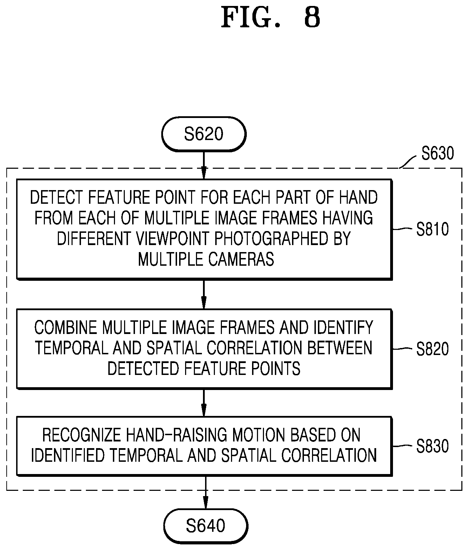

FIG. 8 is a flowchart illustrating a method by which the AR device 100 recognizes a hand-raising motion based on temporal and spatial correlations of feature points of joints, according to an embodiment of the present disclosure.

Operations S810 to S830 shown in FIG. 8 are detailed operations of operation S630 of FIG. 6. Operation S830 shown in FIG. 8 may be followed by operation S640 of FIG. 6.

Operation S810 may be performed after the function and/or operation of S620 of FIG. 6 is performed. In operation S810, the AR device 100 detects feature points for each part of the hand from each of a plurality of image frames having different viewpoints captured through a plurality of cameras. In an embodiment of the present disclosure, the vision sensor 110 (see FIGS. 1 and 4) of the AR device 100 may include a plurality of cameras disposed at different locations for capturing images having different viewpoints. The plurality of cameras included in the vision sensor 110 will be described with reference to FIGS. 9A and 9B.

FIG. 9A illustrates arrangement of the plurality of cameras 110LT, 110LM, 110LB, 110RT, 110RM and 110RB mounted on the AR device 100, according to an embodiment of the present disclosure.

Referring to FIG. 9A, the AR device 100 may be implemented as a head mounted display apparatus (HMD) to be worn on the user's head. In the embodiment shown in FIG. 9A, the HMD may include the top-left camera 110LT and top-right camera 110RT disposed at upper ends of a frame enclosing left-eye and right-eye lenses, the left-middle camera 110LM and right-middle camera 110RM disposed in the middle of the frame, and the bottom-left camera 110LB and bottom-right camera 110RB disposed at lower ends of the frame. Although the AR device 100 is illustrated as including a total of six cameras in FIG. 9A, it is merely an example and is not limited thereto.

Each of the plurality of cameras 110LT, 110LM, 110LB, 110RT, 110RM and 110RB is disposed at a different position on the AR device 100 and has a different viewpoint, so that photographed body parts may not be identical. For example, as the top-left camera 110LT and the top-right camera 110RT are vision sensors that capture front views, when the hand is not positioned within the front views, the top-left camera 110LT and the top-right camera 110RT may not photograph the hand but may obtain image frames that do not include the hand. The left-middle camera 110LM and the right-middle camera 110RM may obtain image frames including both the arm and the hand by photographing the upper arm and the hand. The bottom-left camera 110LB and the bottom-right camera 110RB are vision sensors that photograph downward views, and may obtain image frames regarding the user's forearm and palm.

FIG. 9B illustrates arrangement of the plurality of cameras 110LT, 110LM, 110LB, 110RT, 110RM and 110RB mounted on the AR device 100, according to an embodiment of the present disclosure.

Referring to FIG. 9B, the AR device 100 may be implemented as AR glasses in the form of eye glasses to be worn on the user's face. In the embodiment shown in FIG. 9B, the AR glasses may include the top-left camera 110LT and top-right camera 110RT disposed at upper ends of a frame enclosing left-eye and right-eye lenses, the left-middle camera 110LM and right-middle camera 110RM disposed in the middle of the frame, and the bottom-left camera 110LB and bottom-right camera 110RB disposed at lower ends of the frame. Although the AR device 100 is illustrated as including a total of six cameras in FIG. 9B, it is merely an example and is not limited thereto.

In the embodiment shown in FIG. 9B, parts (e.g., upper arm, forearm, hand, and palm) photographed by the plurality of cameras 110LT, 110LM, 110LB, 110RT, 110RM and 110RB are the same as those described in connection with FIG. 9A, the redundant description will be omitted.

Referring to FIG. 8 again, the AR device 100 may detect feature points for each part of the hand from each of the plurality of image frames obtained by the plurality of cameras 110LT, 110LM, 110LB, 110RT, 110RM and 110RB (see FIGS. 9A and 9B). For example, the AR device 100 may detect joint feature points included in the upper arm and hand from image frames obtained by the left-middle camera 110LM and the right-middle camera 110RM, and detect joint feature points of the forearm and palm from image frames obtained by the bottom-left camera 110LB and the bottom-right camera 110RB.

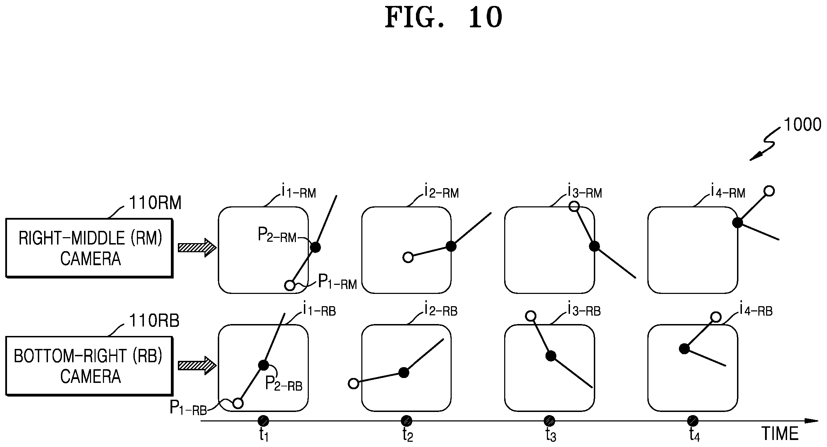

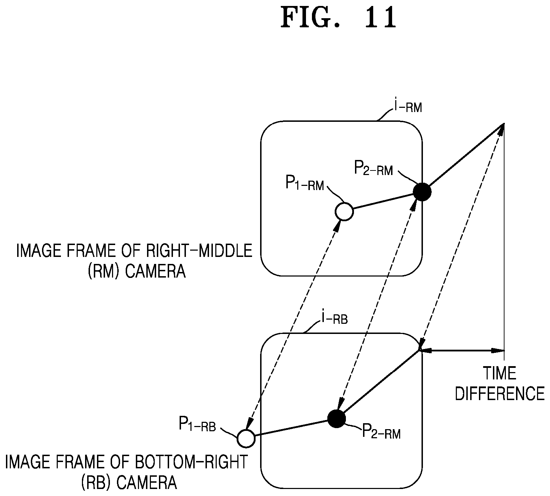

In operation S820, the AR device 100 combines the plurality of image frames and identifies temporal and spatial correlations between the detected feature points. Operation S820 will be described in detail in connection with FIGS. 10 and 11.

FIG. 10 illustrates how the AR device 100 recognizes a hand-raising motion by using a plurality of image frames obtained through the plurality of cameras 110RM and 110RB, according to an embodiment of the present disclosure.

Referring to FIG. 10, the right-middle camera 110RM may obtain a plurality of image frames i_{1-RM} to i_{4-RM} by continuously photographing the user's arm and hand over time. The bottom-right camera 110RB may obtain a plurality of image frames i_{1-RB} to i_{4-RB} by continuously photographing the user's arm and hand over time.

The processor 140 (see FIG. 4) of the AR device 100 may detect feature points P_{1-RM} and P_{2-RM} regarding joints from the plurality of image frames i_{1-RM} to i_{4-RM} obtained by the right-middle camera 110RM. For example, the first joint feature point P_{1-RM} may be a feature point of a hand joint, and the second joint feature point P_{2-RM} may be a feature point of an arm joint. Although each of the feature point of the hand joint and the feature point of the arm joint is illustrated in singular in FIG. 10, it is merely for a convenience of explanation, and the number of the feature points in the present disclosure is not limited to that as shown in FIG. 10. Likewise, the processor 140 may detect feature points P_{1-RB} and P_{2-RB} regarding joints from the plurality of image frames i_{1-RB} to i_{4-RB} obtained by the bottom-right camera 110RB.

The processor 140 may recognize a part of the hand by identifying corresponding feature points by comparing feature points detected from the respective image frames obtained by the plurality of different cameras. For example, the processor 140 may recognize that the first joint feature points P_{1-RM} and P_{1-RB} indicate a hand part by comparing the first joint feature point P_{1-RM} detected from the first image frame i_{1-RM} obtained by the right-middle camera 110RM with the first joint feature point P_{1-RB} detected from the first image frame i_{1-RB} obtained by the bottom-right camera 110RB at a first point of time t₁. Likewise, the processor 140 may recognize that the second joint feature points P_{2-RM} and P_{2-RB} indicate an arm part by comparing the second joint feature point P_{2-RM} detected from the first image frame i_{1-RM} obtained by the right-middle camera 110RM with the second joint feature point P_{2-RB} detected from the first image frame i_{1-RB} obtained by the bottom-right camera 110RB at the point of time t₁.

The processor 140 may identify a spatial correlation between the feature points based on the hand part recognized through the plurality of image frames. In an embodiment of the present disclosure, the processor 140 may obtain a positional relationship between feature points recognized from the plurality of image frames obtained by the different cameras 110RM and 110RB respectively, and a spatial correlation based on information about the arrangement of the cameras 110RM and 110RB on the AR device 100.

Although only the right-middle camera 110RM and bottom-right camera 110RB are illustrated for convenience of explanation, the present disclosure is not limited thereto. Also for the left-middle camera and bottom-left camera, the aforementioned method of obtaining a plurality of image frames, detecting joint feature points from the plurality of image frames and obtaining the spatial correlation between the detected joint feature points may be equally applied.

The processor 140 may identify temporal correlations between the feature points through the plurality of image frames obtained over time. FIG. 11 illustrates how the AR device 100 identifies temporal and spatial correlations of joint feature points P_{1-RM}, P_{2-RM}, P_{1-RM} and P_{2-RB} detected from a plurality of image frames i_{-RM} and i_{-RB}, according to an embodiment of the present disclosure. Also referring to FIG. 11, the processor 140 may detect, from the image frame i_{-RB} obtained by the bottom-right camera 110RB, the feature point P_{1-RB} corresponding to the first joint feature point P_{1-RM} detected from the image frame i_{-RM} obtained through the right-middle camera 110RM, and calculate a time difference between the feature points P_{1-RM} and P_{1-RB}. Likewise, the processor 140 may detect the second joint feature point P_{2-RM} from the image frame i_{-RM} obtained through the right-middle camera 110RM and the second joint feature point P_{2-RB} from the image frame i_{-RB} obtained through the bottom-right camera 110RB, and calculate a time difference between the feature points P_{2-RM} and P_{2-RB}. The processor 140 may identify temporal correlations between the feature points based on the calculated time difference.

Referring to FIG. 8 again, in operation S830, the AR device 100 recognizes a hand-raising motion based on the identified temporal and spatial correlations. Also referring to FIG. 10, the processor 140 of the AR device 100 may recognize the hand-raising motion based on positions of the feature points P_{1-RM,} P_{2-RM,} P_{1-RB} and P_{2-RB}, which are changing over time, and temporal and spatial correlations between the feature points P_{1-RM,} P_{2-RM,} P_{1-RB} and P_{2-RB}.

FIG. 12 is a flowchart illustrating a method by which the AR device 100 recognizes a hand-raising motion based on depth value information of a hand (or hand depth value information), according to an embodiment of the present disclosure.

FIG. 13 illustrates how the AR device 100 recognizes a hand-raising motion based on hand depth value information, according to an embodiment of the present disclosure.

A function and/or operation in which the AR device 100 recognizes a hand-raising motion based on the hand depth value information according to an embodiment of the present disclosure will now be described in detail with reference to FIGS. 12 and 13.

Operation S1210 of FIG. 12 is a detailed operation of operation S210 shown in FIG. 2. In operation S1210, the AR device 100 obtains a plurality of image frames regarding the user's hand by continuously photographing the hand with the depth camera. In an embodiment of the present disclosure, the vision sensor 110 (see FIGS. 1 and 4) may include the depth camera that obtains a depth value of an object. The depth camera may include at least one of, for example, a stereo camera, a ToF camera and an IR camera, but is not limited thereto.

In operation S1220, the AR device 100 obtains the hand depth value from the plurality of obtained image frames. In an embodiment of the present disclosure, the AR device 100 may photograph the user's body with the depth camera, and obtain depth value information for each body part. Also referring to the embodiment shown in FIG. 13, the user 10 who wears the AR device 100 may maintain a steady posture at the first point of time (t=N) and then perform a hand-raising motion at the second point of time (t=N+1). The processor 140 (see FIG. 4) of the AR device 100 may obtain a depth value of a body part by photographing the body of the user 10 with the depth camera. For example, among the body parts of the user 10, the hand part may have a depth value of 66 and the arm part may have depth values of 38, 44, 50, 56 and 62. Depth values shown in FIG. 13 are relative values that represent depth values calculated based on the position of the depth camera, and the magnitude of the value is proportional to the distance to the AR device 100. For example, among the body parts of the user 10, the upper chest has a depth value ranging from 5 to 8, and the depth value increases toward the abdomen.

In operation S1230, the AR device 100 recognizes a change in depth value over time. Also referring to the embodiment shown in FIG. 13, at the second point of time (t=N+1), the user 10 may perform a hand-raising motion, and accordingly, the depth value of the hand may change. For example, the depth value of the hand is 66 and the depth values of the arm part are 38, 44, 50, 56 and 62 at the first point of time (t=N), and the hand-raising motion causes the depth value of the hand to change to 30, 32 or 35 and also the depth values of the arm part to change to 33, 35, 36 and 40 at the second point of time (t=N+1). The processor 140 of the AR device 100 may recognize that the depth values of the hand and a portion of the arm change.

In operation S1240, the AR device 100 recognizes the hand-raising motion based on the changes in depth value. Also referring to the embodiment shown in FIG. 13, the processor 140 may recognize changes in depth value of the hand and arm, and recognize the hand-raising motion of the user 10 based on the changes in depth value. For example, when the depth value of the hand is reduced to below a preset value, the processor 140 may recognize that a hand-raising motion has been performed by the user 10.

The function and/or operation of S1240 may be followed by operation S230 of FIG. 2. Also referring to FIG. 13, when a touch input on the touch interface 160 is detected, the depth value of the hand may change to '0'. The processor 140 of the AR device 100 may detect the touch input when the depth value of the hand changes to '0'. When a touch input is detected within the preset period of time from a point of time when the hand-raising motion is recognized, the processor 140 may determine the touch input as an authorized input intended by the user. When the touch input is determined as an authorized input, the processor 140 may perform an interaction corresponding to the touch input.

When a touch input is detected after a lapse of the preset period of time from the point of time when the hand-raising motion is recognized, the processor 140 may determine the touch input as an unintentional and unauthorized input. When the touch input is determined as the unintentional and unauthorized input, the processor 140 ignores the touch input and does not perform but rather terminates a function or operation.

FIG. 14 is a flowchart illustrating a method by which the AR device 100 determines whether a touch input is a valid input based on sensing data received from a wearable device and performs an interaction based on a result of the determining, according to an embodiment of the present disclosure.

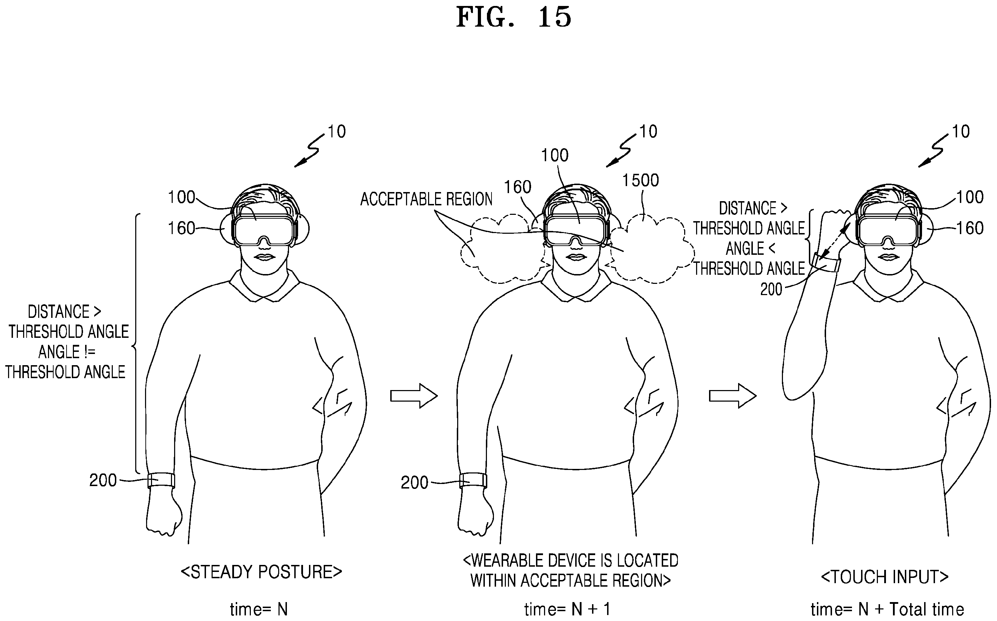

FIG. 15 illustrates how the AR device 100 determines whether a touch input is a valid input based on sensing data received from a wearable device 200, according to an embodiment of the present disclosure.

Functions and/or operations of the AR device 100 according to an embodiment of the present disclosure for determining whether the touch input is a valid input based on the sensing data received from the wearable device 200 and performing an interaction based on a result of the determining will now be described in detail with reference to FIGS. 14 and 15.

Operations S1410 and S1420 shown in FIG. 14 are detailed operations of operation S210 shown in FIG. 2.

In operation S1410, the AR device 100 receives sensing data from a sensor included in a wearable device worn on the user's hand. In the present disclosure, the wearable device may be a device carried by the user while being worn on the user's body part, for example, a smart watch to be worn around the user's hand. Also referring to the embodiment shown in FIG. 15, the wearable device 200 may be a smart watch worn around the wrist of the user 10. However, it is not limited thereto, and the wearable device 200 may include, for example, a smart ring, bracelet, anklet, necklace, contact lens, garment-integrated device (e.g., electronic garment), body-attached device (e.g., skin pad) or bio-implantable device (e.g., implantable circuit).

In an embodiment of the present disclosure, the wearable device 200 may include a UWB communication module or a Bluetooth communication module. The AR device 100 may include the communication interface 170 (see FIG. 4), and the processor 140 (see FIG. 4) may receive a UWB signal or Bluetooth signal from the wearable device 200 through the communication interface 170.

In operation S1410, the AR device 100 obtains a relative positional relationship between the user's hand and the AR device 100 based on the received sensing data. In an embodiment of the present disclosure, the relative positional relationship may include at least one of a distance, a direction and an orientation between the user's hand and the AR device 100.

In an embodiment of the present disclosure, the communication interface 170 of the AR device 100 may include a UWB communication module. The UWB communication module is a communication module that performs data transmission and reception using a ultra wideband frequency band between 3.1 GHz and 10.6 GHz. The UWB communication module may transmit or receive data at up to 500 Mbps. In an embodiment of the present disclosure, the UWB communication module may receive position information from the wearable device by using the ultra wideband frequency. For example, the processor 140 (see FIG. 4) of the AR device 100 may perform ranging by using one of single sided two way ranging (SS-TWR) or double-sided two way ranging (DS-TWR). In an embodiment of the present disclosure, the processor 140 may use a plurality of UWB antenna elements included in the UWB communication module to transmit a ranging request message or a poll message to the wearable device and receive a response message from the wearable device in response to the ranging request signal. The processor 140 may obtain position information of the wearable device through a time of arrival (ToA) or time difference of arrival (TDoA) method that uses a time difference between the ranging request message and the response message. Also referring to an embodiment shown in FIG. 15, the processor 140 may obtain ranging information regarding a relative distance between the wearable device 200 worn on the hand of the user 10 and AoA information, which is direction information of the wearable device.

In an embodiment of the present disclosure, the communication interface 170 of the AR device 100 may include a Bluetooth communication module, and may establish pairing with the wearable device through the Bluetooth communication module. The processor 140 of the AR device 100 may receive a Bluetooth signal from the wearable device through the communication interface 170, and obtain BLE position information from the received Bluetooth signal. The processor 140 may obtain a relative positional relationship between the user's hand and the AR device 100 based on the obtained BLE position information.

Although not shown in FIG. 14, operation S1420 may be followed by operation S220 shown in FIG. 2.

Operations S1430 to S1460 of FIG. 14 are detailed operations of operation S230 shown in FIG. 2. In operation S1430, the AR device 100 identifies whether the user's hand is located within a preset acceptable region based on the relative positional relationship. Also referring to an embodiment shown in FIG. 15, an acceptable region 1500 refers to a location of the hand where the touch input may be acknowledged as an authorized input indented by the user, and may indicate, for example, an area within a preset distance or an angular range from the AR device 100. The acceptable region 1500 may be preset by user input or as a default value at the time of product release. For example, the acceptable region 1500 may refer to an area within 5 centimeters (cm) from the AR device 100. However, it is not limited thereto.

The processor 140 of the AR device 100 may determine whether the user's hand is positioned in the acceptable location based on the relative positional relationship, i.e., at least one of the distance, the direction and the orientation between the user's hand and the AR device 100. Also referring to the embodiment shown in FIG. 15, the user 10 who wears the AR device 100 may maintain a steady posture at the first point of time (t=N) and then perform a hand-raising motion at the second point of time (t=N+1). At the first point of time (t=N), the distance between the AR device 100 and the wearable device 200 may be greater than a threshold distance and the angle may not be equal to a threshold angle. At the second point of time (t=N+1), even when the user 10 performs a hand-raising motion, the hand of the user 10 identified by the wearable device 200 may be located outside the acceptable region 1500. At the third point of time (t=N+total time), a touch input on the touch interface 160 may be detected, and accordingly, the distance between the hand of the user 10 who wears the wearable device 200 and the AR device 100 may change to be less than the threshold distance and the angle may also decrease to be less than the threshold angle. Based on the relative positional relationship between the AR device 100 and the wearable device 200 at the third point of time (t=N+total time), the processor 140 may identify that the user's hand is located within the acceptable region 1500.

In operation S1440, the AR device 100 determines whether the user's hand is in the acceptable region.

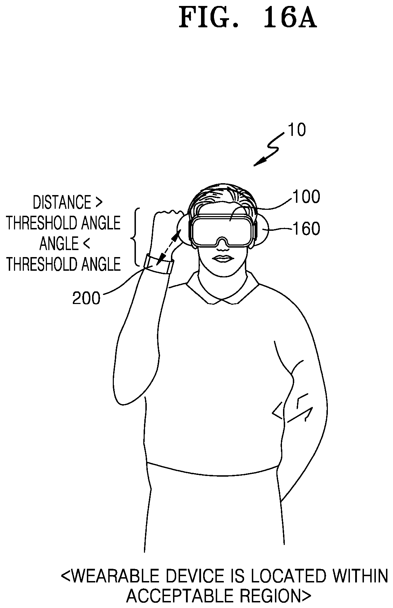

When the hand is determined as being located within the acceptable region in operation S1450, the AR device 100 determines the touch input as a valid input. In an embodiment of the present disclosure, when the hand is determined as being located within the acceptable region, the AR device 100 may determine that the touch input is an authorized input intended by the user. FIG. 16A illustrates an example in which the wearable device 200 is located in an acceptable region. Also referring to FIG. 16A, the distance between the hand of the user 10 who wears the wearable device 200 and the AR device 100 is less than the threshold distance, and the angle between the wearable device 200 and the AR device 100 may be less than the threshold angle. In this case, the processor 140 may determine the touch input on the touch interface 160 as an authorized input.

When the touch input is determined as the valid input in operation S320, the AR device 100 performs a function or operation corresponding to the touch input.

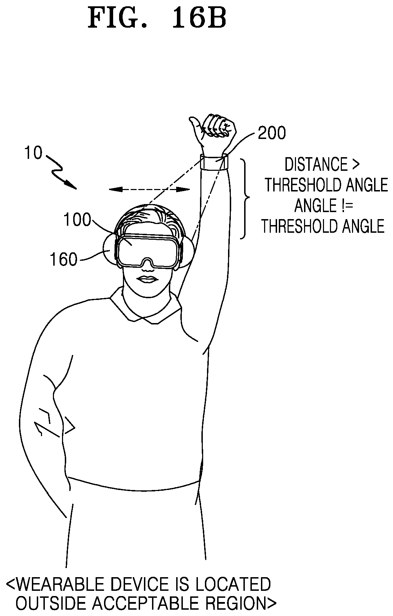

When the hand is determined as being located outside the acceptable region in operation S1460, the AR device 100 determines the touch input as an invalid input. In an embodiment of the present disclosure, when the hand is determined as being located outside the acceptable region, the AR device 100 may determine that the touch input is an unintentional and unauthorized input. FIG. 16B illustrates an example in which the wearable device 200 is outside an acceptable region. Also referring to FIG. 16B, due to a motion of raising the hand above the head, which is performed by the user 10, the distance between the wearable device 200 worn on the hand and the AR device 100 may exceed the threshold distance. Furthermore, the angle between the wearable device 200 and the AR device 100 may not be equal to the threshold angle. In this case, the processor 140 may determine the touch input on the touch interface 160 as an unauthorized input that is not related to the user's intent.

When the touch input is determined as the invalid input in operation S330, the AR device 100 ignores the touch input and does not perform but rather terminates a function or operation.

FIG. 17 is a flowchart illustrating a method by which the AR device 100 determines whether a touch input is an authorized input intended by the user based on electroencephalogram (EEG) signal data obtained by using a brainwave sensor and performs an interaction based on a result of the determining, according to an embodiment of the present disclosure.

Operation S1710 of FIG. 17 is a detailed operation of operation S210 shown in FIG. 2. In operation S1710, the AR device 100 obtains EEG signal data by sensing potential fluctuations of brainwaves with the EEG sensor. In an embodiment of the present disclosure, the AR device 100 may include the brainwave sensor 120 (see FIG. 4), and the brainwave sensor 120 may include an EEG sensor configured to obtain EEG signal data by sensing potential fluctuations of the brainwaves. The processor 140 (see FIG. 4) of the AR device 100 may obtain the EEG signal data by sensing potential fluctuations of the brainwaves from the user's head with the brainwave sensor 120.

Operations S1720 to S1750 are detailed operations of operation S230 shown in FIG. 2.

In an embodiment of the present disclosure, the AR device 100 identifies negative feedback of the brainwave potential based on the EEG signal data. In an embodiment of the present disclosure, based on the EEG signal data obtained through the brainwave sensor 120, the processor 140 may detect, from the EEG signal data, an event-related potential (ERP) component including at least one of a feedback-related negativity (ERP-FRN) component and a feedback-related positivity (ERP-FRP) component by monitoring potential fluctuations of the brainwaves from the user's head. The feedback-related negativity component is feedback indicating an error or anomaly regarding a specific event (e.g., a stimulus or user input), and may include, for example, error-related negativity (ERN). In an embodiment of the present disclosure, the processor 140 may identify the error-related negativity (ERN) by monitoring EEG signal data obtained over time.

Although not shown in FIG. 17, operation S1720 may be followed by operation S220 shown in FIG. 2.

In operation S1730, the AR device 100 determines whether the error-related negativity (ERN) is identified within a preset period of time from a point of time when the touch input is received. In the present disclosure, the preset period of time may be, for example, at least 50 ms to 100 ms from the point of time when the touch input is detected. However, it is not limited thereto.

In an embodiment of the present disclosure, upon receiving a touch input from the user through the touch interface 160 (see FIG. 4), the processor 140 of the AR device 100 may not perform an interaction corresponding to the touch input and may not output a graphic user interface (graphic UI) related to the interaction, for a preset period of time, e.g., at least 50 ms to 10 ms. The user expects a change in output after providing the touch input to the touch interface. However, when the expected result (e.g., a change in output) does not match an actual result (e.g., no interaction performed for the preset period of time), the user is likely to be perplexed, in which case negative feedback may be detected in the brainwave potential signal. The negative feedback may include, for example, error-related negativity (ERN). When the touch input is not intended, the brain of the user does not expect a change in current output. In this case, no negative feedback is identified from the EEG signal data.

An embodiment where the negative feedback, e.g., error-related negativity (ERN), is identified will be described with reference to FIG. 18.

FIG. 18 illustrates an example of EEG signal data 1800 representing fluctuations in brainwave potential when a touch input is detected. Referring to the EEG signal data 1800 shown in FIG. 18, during a preset period of time from a point of time t₀ when a touch input is received from the user, a signal of correct response negativity (CRN) 1810 does not fluctuate significantly while a signal of error-related negativity (ERN) 1820 significantly increases in value. Between the point of time t₀ when the touch input is received and a first point of time t₁ before a lapse of the preset period of time, e.g., 100 ms, the error-related negativity 1820 may have a larger fluctuation range and a greater value than the correct response negativity 1810. In the present disclosure, the error-related negativity 1820 is signal data that refers to fluctuations in brainwave potential that occur when no interaction nor graphic UI is output although the user expects the interaction to be performed or the related graphic UI to be output after the user provides a touch input on the touch interface.

Referring to FIG. 17 again, when the error-related negativity (ERN) is identified in operation S1740 within the preset period of time from a point of time when the touch input is detected, the AR device 100 determines the touch input as a valid input. Also referring to FIG. 18, as the error-related negativity 1820 is identified within the preset period of time from the point of time t₀ when the touch input is received, the processor 140 may determine the touch input as an authorized input intended by the user.

When the touch input is determined as the valid input in operation S320, the AR device 100 performs a function or operation corresponding to the touch input.

When the error-related negativity (ERN) is identified or the ERN is not identified in operation S1750 after a lapse of the preset period of time from the point of time when the touch input is detected, the AR device 100 determines the touch input as an invalid input. In an embodiment of the present disclosure, when the error-related negativity (ERN) is identified or the ERN is not identified after a lapse of the preset period of time from the point of time when the touch input is detected, the AR device 100 may determine that the touch input is an unintentional and unauthorized input. When the touch input is determined as the invalid input in operation S330, the AR device 100 ignores the touch input and does not perform but rather terminates a function or operation.

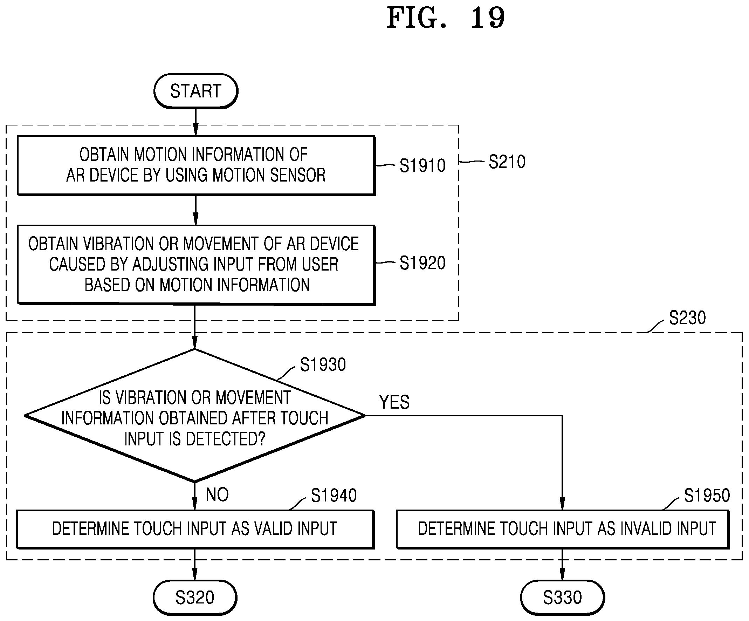

FIG. 19 is a flowchart illustrating a method by which the AR device 100 determines whether a touch input is an authorized input intended by the user based on motion information and performs an interaction based on a result of the determining, according to an embodiment of the present disclosure.

Operations S1910 and S1920 of FIG. 19 are detailed operations of operation S210 shown in FIG. 2.

In operation S1910, the AR device 100 obtains motion information of the AR device by using the motion sensor 130 (see FIG. 4). In the present disclosure, the motion sensor 130 is configured to sense motion information regarding the movement of the device. In an embodiment of the present disclosure, the processor 140 (see FIG. 4) may obtain, through the motion sensor 130, motion information by sensing a vibration or movement of the AR device 100 when a user input or an unauthorized input from an outsider is applied to the AR device 100.

In operation S1920, the AR device 100 obtains the vibration or movement information of the AR device caused by the user's adjusting input based on the motion information. In the present disclosure, the adjusting input refers to a user input that changes setting information or an option of the AR device 100. The adjusting input may differ in intensity and pattern from touch inputs that touch or tap the touch interface 160. In an embodiment of the present disclosure, the processor 140 of the AR device 100 may detect a type of motion happing in the sensing data obtained from the motion sensor 130, and determine whether the input received from the user is an adjusting input or a touch input based on the motion happing type. A method of the determining will be described with reference to FIGS. 20A and 20B.

FIG. 20A illustrates an example of motion sensing data 2000a when a touch input is received.

Referring to the motion sensing data 2000a shown in FIG. 20A, when a touch input is received from the user, vibrations having impulse patterns are detected during a relatively short period of time.

FIG. 20B illustrates an example of motion sensing data 2000b when an adjusting input is received.

Referring to the motion sensing data 2000b shown in FIG. 20B, unlike the case that the touch input is received, the sensing data tends to have a pattern continuously detected over a relatively long period of time and have the vibration amplitude larger than vibrations caused by the touch input.

Referring to FIG. 19 again, although not shown, operation S1920 may be followed by operation S220 shown in FIG. 2.

Operations S1930 to S1950 of FIG. 19 are detailed operations of operation S230 shown in FIG. 2. In operation S1930, the AR device 100 determines whether vibration or movement information is obtained after a touch input is detected.

When no vibration or movement information is obtained in operation S1940 after the touch input is detected, the AR device 100 determines that a touch input is received instead of the adjusting input from the user and determines the touch input as a valid input. When the touch input is determined as the valid input in operation S320, the AR device 100 performs a function or operation corresponding to the touch input.

When vibration or movement information is obtained in operation S1940 after the touch input is detected, the AR device 100 determines that an adjusting input is received from the user and determines the touch input as an invalid input. In an embodiment of the present disclosure, when vibration or movement information is obtained after a touch input is detected, the AR device 100 may determine that an adjusting input is received from the user and determine that the touch input is an unintentional and unauthorized input. When the touch input is determined as the invalid input in operation S330, the AR device 100 ignores the touch input but rather terminates a function or operation.

In the embodiments shown in FIGS. 19, 20A and 20B, the AR device 100 may obtain the motion sensing data 2000a and 2000b obtained through the motion sensor 130, analyze the pattern of the motion sensing data 2000a and 2000b, and determine that the touch input is an unintentional and unauthorized input when the adjusting input is determined as being received. Accordingly, the AR device 100 according to an embodiment of the present disclosure may prevent unintentional interactions from being automatically performed by not performing an interaction corresponding to an input when the user provides the input such as changing setting information or adjusting an option.

The present disclosure provides the AR device 100 that determines whether the touch input is an authorized input intended by the user and performs an interaction according to a result of the determining. According to an embodiment of the present disclosure, an AR device 100 may include at least one sensor, the touch interface 160 configured to receive a touch input, the at least one processor 140 including a processing circuit, and the memory 150 storing one or more instructions. The one or more instructions may be individually or collectively executed by the at least one processor 140 to cause the AR device 100 to detect a hand movement through the at least one sensor and determine whether the touch input received through the touch interface 160 is a valid input based on the detected hand movement. The one or more instructions may be individually or collectively executed by the at least one processor 140 to cause the AR device 100 to determine whether to perform an interaction corresponding to the touch input based on a result of the determination regarding the valid input.

In an embodiment of the present disclosure, the one or more instructions may be individually or collectively executed by the at least one processor 140 to cause the AR device 100 to ignore the touch input without performing a function or operation corresponding to the touch input when the touch input is determined as an invalid input as a result of the determining.

In an embodiment of the present disclosure, the at least one sensor may include the vision sensor 110 configured as a camera. The one or more instructions may be individually or collectively executed by the at least one processor 140 to cause the AR device 100 to obtain a plurality of image frames regarding a hand by continuously photographing the hand of the user by using the camera, input the plurality of obtained image frames to an AI model, and detect feature points of joints of the hand from the plurality of image frames by performing vision recognition through the AI model. The one or more instructions may be individually or collectively executed by the at least one processor 140 to cause the AR device 100 to recognize a hand-raising motion based on a movement of the detected feature points over time. The one or more instructions may be individually or collectively executed by the at least one processor 140 to cause the AR device 100 to determine that the touch input is a valid input when the touch input is detected within a preset period of time from a point of time when the hand-raising operation is recognized.

In an embodiment of the present disclosure, the camera may include a plurality of cameras disposed at different locations on the AR device 100 and having different views. The one or more instructions may be individually or collectively executed by the at least one processor 140 to cause the AR device 100 to detect feature points of each part of the hand from a plurality of image frames having different viewpoints photographed by the plurality of cameras, respectively. The one or more instructions may be individually or collectively executed by the at least one processor 140 to cause the AR device 100 identify, by combining the plurality of image frames, temporal and spatial correlations between feature points of each part detected from the plurality of image frames. The one or more instructions may be individually or collectively executed by the at least one processor 140 to cause the AR device 100 to recognize a hand-raising motion based on the temporal and spatial correlations between the feature points.

In an embodiment of the present disclosure, the at least one sensor may include the vision sensor 110 configured as a depth camera that obtains a depth value of an object. The one or more instructions may be individually or collectively executed by the at least one processor 140 to cause the AR device 100 to obtain depth values of the hand from the plurality of image frames continuously obtained through the depth camera and recognize changes of the obtained depth values over time. The one or more instructions may be individually or collectively executed by the at least one processor 140 to cause the AR device 100 to recognize a hand-raising motion based on the change in depth value.

In an embodiment of the present disclosure, the AR device 100 may further include the communication interface 170 configured to perform data communication with an external device. The communication interface 170 may receive the sensing data from a sensor included in the wearable device 200 worn on the user's hand. The one or more instructions may be individually or collectively executed by the at least one processor 140 to cause the AR device 100 to obtain relative positional relationship information including information regarding at least one of a distance, a direction and an orientation between the user's hand and the AR device based on the sensing data received from the wearable device 200. The one or more instructions may be individually or collectively executed by the at least one processor 140 to cause the AR device 100 to identify whether the user's hand is located in an acceptable region based on the obtained relative positional relationship information, and determine whether the touch input is a valid input based on a result of the identifying.

In an embodiment of the present disclosure, the wearable device 200 may include at least one of a UWB communication module and a Bluetooth communication module. The sensing data may include at least one of BLE position information and AoA information in a UWB signal received from the wearable device 200.

In an embodiment of the present disclosure, the at least one sensor may include the brainwave sensor 120 configured to obtain EEG signal data by sensing potential fluctuations of brainwaves. The one or more instructions may be individually or collectively executed by the at least one processor 140 to cause the AR device 100 to obtain EEG signal data by detecting potential fluctuations of brainwaves from the user's head with the brainwave sensor 120, and identifying negative feedback of brainwave potential based on the obtained EEG signal data. The one or more instructions may be individually or collectively executed by the at least one processor 140 to cause the AR device 100 to determine whether the touch input is a valid input based on a result of the identifying.

In an embodiment of the present disclosure, the one or more instructions may be individually or collectively executed by the at least one processor 140 to cause the AR device 100 to identify error-related negativity (ERN) by monitoring fluctuations of potential characteristics of the EEG signal data during a preset period of time from a point of time when the touch input is received. The one or more instructions may be individually or collectively executed by the at least one processor 140 to cause the AR device 100 to determine whether the touch input is a valid input when the error-related negativity is identified.

In an embodiment of the present disclosure, the at least one sensor may further include the motion sensor 130 that detects a movement of the AR device 100. The one or more instructions may be individually or collectively executed by the at least one processor 140 to cause the AR device 100 to obtain motion information including a vibration or movement of the AR device 100 caused by an adjusting input from the user by using the motion sensor 130. The one or more instructions may be individually or collectively executed by the at least one processor 140 to cause the AR device 100 to determine the touch input as an invalid input when the motion information is obtained after the touch input is detected.

The present disclosure provides a method by which the AR device 100 determines a valid touch input and performs an interaction according to a result of the determining. According to an embodiment of the present disclosure, an operation method of the AR device 100 may include obtaining sensing data regarding a hand movement by using at least one sensor in operation S210. The operation method of the AR device 100 may include detecting a touch input on the touch interface 160 in operation S220. The operation method of the AR device 100 may include determining whether the touch input is a valid input based on the obtained sensing data in operation S230.

In an embodiment of the present disclosure, the operation method of the AR device 100 may include ignoring the touch input without performing a function or operation corresponding to the touch input when the touch input is determined as an invalid input as a result of the determination about valid input.

In an embodiment of the present disclosure, the at least one sensor may include the vision sensor 110 configured as a camera. The obtaining of the sensing data in operation S210 may include obtaining a plurality of image frames regarding a hand by continuously photographing the hand of the user in operation S610. The operation method of the AR device 100 may include inputting the plurality of obtained image frames to an AI model and detecting feature points of hand joints from the plurality of image frames through inferencing using the AI model in operation S620; and recognizing a hand-raising motion based on a movement of the detected feature points over time in operation S630. The determining of whether the touch input is a valid input in operation S230 may include determining the touch input as a valid input in operation S650 when the touch input is detected within a preset period of time from a point of time when the hand-raising motion is recognized.

In an embodiment of the present disclosure, the camera may include a plurality of cameras disposed at different locations on the AR device 100 and having different views. The recognizing of the hand-raising motion in operation S630 may include detecting a feature point of each part of the hand from each of the plurality of image frames having different viewpoints photographed by the plurality of cameras in operation S810; and identifying, by combining the plurality of image frames, temporal and spatial correlations between feature points of each part detected from the plurality of image frames in operation S820. The recognizing of the hand-raising motion in operation S630 may include recognizing a hand-raising motion based on the temporal and spatial correlations between the features.

In an embodiment of the present disclosure, the at least one sensor may include the vision sensor 110 configured as a depth camera that obtains a depth value of an object. The operation method of the AR device 100 may further include obtaining hand depth values from the plurality of image frames continuously obtained through the depth camera in operation S1220; and recognizing changes of the obtained depth values over time in operation S1230. The obtaining of the at least one of hand movement information, position information and biometric information in operation S220 may include recognizing a hand-raising motion based on the change in depth value in operation S1240.

In an embodiment of the present disclosure, the obtaining of the sensing data in operation S210 may include receiving the sensing data from a sensor included in the wearable device 200 worn on the user's hand in operation S1410. The obtaining of the at least one of hand movement information, position information and biometric information in operation S220 may include obtaining relative positional relationship information including information regarding at least one of a distance, a direction and an orientation between the user's hand and the AR device based on the received sensing data in operation S1420. The determining of whether the touch input is a valid input in operation S230 may include identifying whether the user's hand is located in a preset acceptable region based on the obtained relative positional relationship information in operation S1430; and determining whether the touch input is a valid input based on a result of the identifying in operation S1440.

In an embodiment of the present disclosure, the at least one sensor may include an EEG sensor configured to obtain EEG signal data by detecting potential fluctuations of brainwaves. The obtaining of the sensing data in operation S210 may include obtaining EEG signal data by sensing potential fluctuations of brainwaves in the user's head with the EEG sensor in operation S1710. The determining of whether the touch input is a valid input in operation S230 may include identifying negative feedback of brainwave potential based on the obtained EEG signal data in operation S1720; and determining whether the touch input is a valid input based on a result of the identifying in operation S1730.

In an embodiment of the present disclosure, the identifying of the negative feedback of the brainwave potential in operation S1720 may include identifying error-related negativity (ERN) by monitoring fluctuations of potential characteristics of the EEG signal data for a preset period of time from a point of time when the touch input is received. The determining of whether the touch input is a valid input in operation S230 may include determining the touch input as a valid input when the error-related negativity is identified.

In an embodiment of the present disclosure, the obtaining of the sensing data in operation S210 may include obtaining motion information regarding a movement of the AR device 100 through the motion sensor 130, and obtaining motion information regarding a vibration or movement of the AR device caused by an adjusting input from the user to adjust the AR device with the motion sensor 130 in operation S1910. The determining of whether the touch input is a valid input in operation S230 may include determining the touch input as an invalid input when the motion information is obtained after the touch input is detected.

The present disclosure provides a computer program product including a computer-readable storage medium. The storage medium may include instructions that are readable by the AR device 100 to cause the AR device 100 to perform obtaining sensing data regarding a hand movement by using at least one sensor; detecting a touch input on the touch interface 160; and determining whether the touch input is a valid input based on the sensing data regarding the hand movement.

A program executed by the AR device 100 as described in the present disclosure may be implemented in hardware elements, software elements, and/or a combination thereof. The program may be performed by any system capable of performing computer-readable instructions.

The software may include a computer program, codes, instructions, or one or more combinations of them, and may configure a processing device to operate as desired or instruct the processing device independently or collectively.

The software may be implemented with a computer program including instructions stored in a computer-readable recording (or storage) medium. Examples of the computer-readable recording medium include a magnetic storage medium (e.g., a read only memory (ROM), a floppy disk, a hard disk, etc.), and an optical recording medium (e.g., a compact disc ROM (CD-ROM), or a digital versatile disc (DVD)). The computer-readable recording medium may also be distributed over network-coupled computer systems so that the computer-readable codes may be stored and executed in a distributed fashion. The media may be read by the computer, stored in the memory, and executed by the processor.

The computer-readable storage medium may be provided in the form of a non-transitory storage medium. The term 'non-transitory' just means that the storage medium is tangible without including a signal, but does not help distinguish any data stored semi-permanently or temporarily in the storage medium. For example, the non-transitory storage medium may include a buffer that temporarily stores data.

Furthermore, the program according to the embodiments of the disclosure may be provided in a computer program product. The computer program product may be a commercial product that may be traded between a seller and a buyer.

The computer program product may include a software program and a computer-readable storage medium having the software program stored thereon. For example, the computer program product may include a product (e.g., a downloadable application) in the form of a software program that is electronically distributed by the manufacturer of the AR device 100 or by an electronic market (e.g., Samsung Galaxy store^{®}). For the electronic distribution, at least a portion of the software program may be stored in a storage medium or arbitrarily generated. In this case, the storage medium may be one of a server of the manufacturer of the AR device 100, a server of the electronic market, or a relay server that temporarily stores the software program.

The computer program product may include a storage medium of a server or a storage medium of the AR device 100 in a system including the AR device 100 and/or the server. Alternatively, when there is a third device (e.g., a wearable device) communicatively connected to the AR device 100, the computer program product may include a storage medium of the third device. In another example, the computer program product may include a software program itself that is transmitted from the AR device 100 to the third device or transmitted from the third device to the electronic device.

In this case, one of the AR device 100 or the third device may execute the computer program product to perform the method according to the embodiments of the disclosure. Alternatively, at least one of the AR device 100 and the third device may execute the computer program product to perform the method according to the embodiments of the disclosure in a distributed fashion.

For example, the AR device 100 may execute the computer program product stored in the memory 150 (see FIG. 4) to control another electronic device communicatively connected to the AR device 100 to perform the method according to the embodiments of the disclosure.

In another example, the third device may execute the computer program product to control the electronic device communicatively connected to the third device to perform the method according to the embodiments of the disclosure.

In the case that the third device executes the computer program product, the third device may download the computer program product from the AR device 100 and execute the downloaded computer program product. Alternatively, the third device may execute the computer program product that is preloaded to perform the method according to the embodiments of the disclosure.

Although the disclosure is described with reference to some embodiments as described above and accompanying drawings, it will be apparent to those of ordinary skill in the art that various modifications and changes can be made to the embodiments. For example, the aforementioned method may be performed in a different order, and/or the aforementioned components such as a computer system or a module may be combined in a different form from what is described above, and/or replaced or substituted by other components or equivalents thereof, to obtain appropriate results.

## Claims

1. An augmented reality (AR) device (100) comprising:
at least one sensor;
a touch interface (160) configured to receive a touch input;
at least one processor (140) including a processing circuit; and
memory (150) storing one or more instructions,
wherein the one or more instructions are individually or collectively executed by the at least one processor (140) to cause the AR device (100) to:
sense a hand movement through the at least one sensor,
determine whether a touch input received through the touch interface (160) is a valid input based on the hand movement, and
determine whether to perform an interaction corresponding to the touch input based on a result of the determination regarding the valid input.

2. The AR device (100) of claim 1, wherein:
the at least one sensor comprises a vision sensor (110) configured as a camera, and
the one or more instructions are individually or collectively executed by the at least one processor (140) to cause the AR device (100) to:
obtain a plurality of image frames regarding a user's hand by continuously photographing the hand by using the camera
input the plurality of obtained image frames to an artificial intelligence (AI) model and detect feature points of hand joints from the plurality of image frames by performing vision recognition through the AI model,
recognize a hand-raising motion based on a movement of the detected feature points over time, and
determine the touch input as a valid input when the touch input is detected within a preset period of time from a point of time when the hand-raising motion is recognized.

3. The AR device (100) of claim 1, wherein:
the at least one sensor comprises a vision sensor (110) configured as a depth camera that obtains a depth value of an object, and
the one or more instructions are individually or collectively executed by the at least one processor (140) to cause the AR device (100) to:
obtain hand depth values from a plurality of image frames continuously obtained through the depth camera,
recognize a change of the obtained depth values over time, and
recognize a hand-raising motion based on the change in depth value.

4. The AR device (100) of claim 1, further comprising:
a communication interface (170) configured to perform data communication with an external device, wherein:
the communication interface (170) receives sensing data from a sensor included in a wearable device (200) worn on a user's hand, and
the one or more instructions are individually or collectively executed by the at least one processor (140) to cause the AR device (100) to:
obtain relative positional relationship information including information regarding at least one of a distance, a direction and an orientation between the user's hand and the AR device, based on the received sensing data, and
identify whether the user's hand is located in a preset acceptable region based on the obtained relative positional relationship information, and determine whether the touch input is a valid input based on a result of the identifying.

5. The AR device (100) of claim 1, wherein:
the at least one sensor comprises a brainwave sensor (120) configured to obtain electroencephalogram (EEG) signal data by detecting potential fluctuations of brainwaves, and
the one or more instructions are individually or collectively executed by the at least one processor (140) to cause the AR device (100) to:
obtain EEG signal data by sensing potential fluctuations of brainwaves from the user's head by using the brainwave sensor (120), and
identify negative feedback of brainwave potential based on the obtained EEG signal data, and determine whether the touch input is a valid input based on a result of the identifying.

6. The AR device (100) of claim 5, wherein the one or more instructions are individually or collectively executed by the at least one processor (140) to cause the AR device (100) to:
identify error-related negativity (ERN) by monitoring fluctuations of potential characteristics of the EEG signal data for a preset period of time from a point of time when the touch input is received, and
determine the touch input as a valid input when the ERN is identified.

7. The AR device (100) of any one of claims 1 to 6, wherein:
the at least one sensor detects a movement of the AR device (100), and
the one or more instructions are individually or collectively executed by the at least one processor (140) to cause the AR device (100) to:
obtain, by using the motion sensor (130), motion information including a vibration or movement of the AR device (100) caused by an adjusting input from a user, and
determine the touch input as an invalid input when the motion information is obtained after the touch input is detected.

8. An operation method of an AR device (100), the operation method comprising:
obtaining, by using at least one sensor, sensing data regarding a hand movement (S210);
detecting a touch input on a touch interface (160) of the AR device (100) (S220); and
determining based on the obtained sensing data whether the touch input is a valid input (S230).

9. The operation method of claim 8, wherein:
the at least one sensor comprises a vision sensor (110) configured as a camera, and
the obtaining of the sensing data (S210) comprises obtaining a plurality of image frames regarding a user's hand by continuously photographing the hand by using the camera (S610),
the operation method of the AR device (100) further comprises:
inputting the plurality of obtained image frames to an artificial intelligence (AI) model and detecting feature points of hand joints from the plurality of image frames through inferencing using the AI model (S620); and
recognizing a hand-raising motion based on a movement of the detected feature points over time, and
the determining of whether the touch input is a valid input (S230) comprises determining the touch input as a valid input (S650) when the touch input is detected within a preset period of time from a point of time when the hand-raising motion is recognized.

10. The operation method of claim 8, wherein:
the at least one sensor comprises a vision sensor (110) configured as a depth camera that obtains a depth value of an object, and
the operation method of the AR device (100) further comprises:
obtaining hand depth values from a plurality of image frames continuously obtained through the depth camera (S1220);
recognizing a change of the obtained depth value over time (S1230); and
recognizing a hand-raising motion based on the change in depth value (S1240).

11. The operation method of claim 8, wherein:
the obtaining of the sensing data (S210) comprises:
receiving the sensing data from a sensor included in a wearable device (200) worn on the user's hand (S1410); and
obtaining relative positional relationship information including information regarding at least one of a distance, a direction and an orientation between the user's hand and the AR device, based on the received sensing data (S1420), and
the determining of whether the touch input is a valid input (S230) comprises:
identifying whether the user's hand is located in a preset acceptable region based on the obtained relative positional relationship information (S1430); and
determining whether the touch input is a valid input based on a result of the identifying (S1440).

12. The operation method of claim 8, wherein:
the at least one sensor comprises a electroencephalogram (EEG) sensor configured to obtain EEG signal data by sensing potential fluctuations of brainwaves,
the obtaining of the sensing data (S210) comprises obtaining the EEG signal data by sensing potential fluctuations of brainwaves from the user's head by using the EEG sensor (S1710), and
the determining of whether the touch input is a valid input (S230) comprises:
identifying negative feedback of brainwave potential based on the obtained EEG signal data (S1720); and
determining whether the touch input is a valid input based on a result of the identifying (S1730).

13. The operation method of claim 12, wherein:
the identifying of the negative feedback of the brainwave potential (S1720) comprises:
identifying error-related negativity (ERN) by monitoring fluctuations of potential characteristics of the EEG signal data for a preset period of time from a point of time when the touch input is received, and
the determining of whether the touch input is a valid input (S230) comprises determining the touch input as a valid input when the ERN is identified.

14. The operation method of any one of claims 8 to 13, wherein:
the obtaining of the sensing data (S210) comprises:
obtaining, through a motion sensor (130), motion information regarding a movement of the AR device (100); and
obtaining, through the motion sensor (130), motion information regarding a vibration or movement of the AR device caused by an adjusting input from the user to adjust the AR device (S1910), and
the determining of whether the touch input is a valid input (S230) comprises determining the touch input as an invalid input when the motion information is obtained after the touch input is detected.

15. A computer program product comprising a computer-readable storage medium,
wherein the storage medium comprises instructions executed by an augmented reality (AR) device (100) to cause the AR device (100) to perform:
obtaining sensing data regarding a hand movement by using at least one sensor;
detecting a touch input on a touch interface (160) of the AR device (100); and
determining whether the touch input is a valid input based on the obtained sensing data.
